(19) Europäisches Patentamt
European Patent Office
Office européen des brevets

(11) EP 2 557 473 A1

(12) **EUROPEAN PATENT APPLICATION**

(43) Date of publication:
**13.02.2013 Bulletin 2013/07**

(21) Application number: **11177100.2**

(22) Date of filing: **10.08.2011**

(51) Int Cl.:
***G06F 1/16*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Research In Motion Limited**
**Waterloo, ON N2L 3W8 (CA)**

(72) Inventors:
• **Griffin, Jason Tyler**
**Waterloo, Ontario N2L 3W8 (CA)**

• **Riddiford, Martin**
**London, W1T 2HN (GB)**
• **Reeves, James William**
**Twyford, Berkshire RG10 9AD (GB)**

(74) Representative: **Moore, Barry et al**
**Hanna Moore & Curley**
**13 Lower Lad Lane**
**Dublin 2 (IE)**

Remarks:
Amended claims in accordance with Rule 137(2) EPC.

(54) **Mobile electronic device having at least three operating configurations**

(57) According to some embodiments, a mobile electronic device is provided with a linkage mechanism that couples first and second members of the device such that the first and second members may be moved between a first position, a second position and a third position. The second member of the device includes a body and an input member. The input member includes an input device and is coupled to the body by a lateral displacement mechanism that allows the input member to move between an extended position and a retracted position. The linkage mechanism and the lateral displacement mechanism may thereby provide at least three operating configurations for the device. An assembly for use with an electronic device is also provided. The assembly may be attachable to, and possibly detachable from, the device.

**FIG. 29**

## Description

### Field of the Disclosure

The application relates to mobile electronic devices, and more particularly to mobile electronic devices having first and second body members which may be arranged in opened and closed positions.

### Background

A mobile electronic device may include a surface having one or more interface elements such as a touchscreen, another type of graphical display, a keyboard, etc. A touchscreen or other graphical display may be large and substantially cover the surface of the device. Mobile devices having large interface elements, such as a large touchscreen or graphical display, may typically be limited in their ability to protect those large elements. For example, a conventional mobile device with a large touchscreen and/or graphical display may include a single main body member which houses the interface elements of the device. The touchscreen and/or graphical display may be constantly exposed. Therefore, interface elements, such as a touchscreen or display, may become scratched, dirty, or otherwise degraded when not in use. Such conventional devices include "tablet" computing devices and other conventional portable computing and/or communication products.

In recent years, as consumer electronics products have evolved towards using ever larger screens, consumers have become increasingly concerned that these screens will get scratched or damaged. This often results in the consumer purchasing and fitting protective sleeves, films or covers that add bulk, detract from aesthetics, and can be difficult to fit and sometimes even compromise functionality. A conventional cover may include a front cover that opens similarly to the cover of a book to expose the surface of the device having interface elements. Thus, opening and closing the device may, at least temporarily, increase the overall width of the device rendering the conventional type of cover inconvenient to use when the device is being used during situations where personal space is limited, such as on buses or airplanes. Furthermore, a conventional cover may be loose and/or uncontrolled when the device is opened. The user may also encounter the ergonomic problem of what to do with this redundant cover element or 'flap', thus making the process of opening and closing the device cumbersome.

Some devices having a body member with a large touchscreen or other display may not include, in addition to the touchscreen or other display, an input device, such as a keyboard, that requires a substantial surface area. In other conventional devices, an input device may be provided on a sliding member that slides in a direction parallel to the touchscreen or other interface elements. Thus, when the device is on a flat surface so that the user can use the input device (e.g. type on the keyboard), the touchscreen or other display will also lay flat on the surface. The user may therefore need to bend their neck to look down at the device while typing. Such a configuration may not be as comfortable and/or ergonomic as a laptop, notebook or desktop computer configuration where the screen is angled with respect to the keyboard, thereby allowing the user to look in a more horizontal direction at the screen when typing.

### Summary

According to one aspect there is provided a mobile electronic device comprising: a first member having a first surface and a second surface opposite to the first surface; a second member comprising a body and an input member, the input member comprising an input device and being coupled to the body by a displacement mechanism adapted to allow the input member to move between an extended position and a retracted position; and at least one linkage mechanism interconnecting the first member and the second member such that the first member and the second member can be moved relative to each other between: a first position wherein the first member overlies the second member, the first surface is accessible and faces away from the second member, and the second surface faces toward the second member; a second position wherein the first member overlies the second member, the second surface is accessible and faces away from the second member, and the first surface faces toward the second member; and a third position wherein the first member is angled with respect to the second member and the first surface is accessible, wherein the input device is accessible when the first member and the second member are in the third position and the input member is in the extended position.

In some embodiments the displacement mechanism and the at least one linkage mechanism provide at least three operating configurations for the device comprising: a first operating configuration in which the first member and the second member are in the first position and the input member is in the retracted position; a second operating configuration in which the first member and the second member are in the second position and the input member is in the retracted position; and a third operating configuration in which the first member and the second member are in the third position, the input member is in the extended position and the input member is accessible.

In some embodiments the device further comprises a stop mechanism adapted to hold the first member and the second member in the third position.

In some embodiments the displacement mechanism comprises a lateral displacement mechanism adapted to allow the input member to be moved laterally between the retracted position and the extended position.

In some embodiments the lateral displacement mechanism comprises at least one sliding hinge.

In some embodiments the second member comprises a recess, and, in the retracted position, the input member is received in the recess.

In some embodiments the at least one linkage mechanism is attachable to the first member.

In some embodiments the at least one linkage mechanism is detachable from the first member.

In some embodiments the input device comprises a keyboard.

In some embodiments the first member rotates about 180 degrees with respect to the second member in movement of the first member between the first position and the second position.

In some embodiments the at least one linkage mechanism allows continuous rotation of the first member for movement from the first position to the second position and for movement from the second position to the first position.

In some embodiments the at least one linkage mechanism comprises: a linkage intermediate the first member and the second member, the linkage having a fixed length; and a motion constraint mechanism that constrains movement of the first member with respect to the second member between the first and second positions to a pre-defined rotational and translational path, the rotational and translational path being defined by a rotation of the first member with respect to the second member and a counter-rotation of the linkage with respect to the second member, the counter-rotation of the linkage being actuated by the rotation of the first member.

In some embodiments the first member has a first end, a second end and a length between the first end and the second end, and the at least one linkage mechanism is connected to the first member less than one quarter of the length away from the second end of the first member, the first end initially rotating away from the second member during both movement from the first position to the second position and movement from the second position to the first position.

In some embodiments the first member includes at least one interface element on the first surface.

In some embodiments the at least one linkage mechanism comprises a first linkage mechanism located at a first side of the device and a second linkage mechanism located at the second side of the device.

According to another aspect, there is provided an assembly for mobile electronic device, the assembly comprising: a cover member comprising a body and an input member, the input member comprising an input device and being coupled to the body by a displacement mechanism that allows the input member to move between an extended position and a retracted position; and at least one linkage mechanism that is attachable to the device, the at least one linkage mechanism, when attached to the device, interconnecting the device and the cover member such that the device and the cover member can be moved relative to each other between: a first position wherein the device overlies the cover member; a second position wherein the device is angled with respect to the cover member; and a third position wherein the device overlies the cover member and the device is rotated about 180 degrees with respect to the first position.

In some embodiments, the at least one linkage mechanism is detachable from the device.

In some embodiments, the input device includes at least one of a keyboard.

In some embodiments, the cover member comprises a recess, and, in the retracted position, the input member is received in the recess.

In some embodiments, the displacement mechanism comprises at least one sliding hinge that allows the input member to slide between the retracted position and the extended position.

Other aspects and features of the disclosure will become apparent, to those ordinarily skilled in the art, upon review of the following description of some specific example embodiments.

**Brief Description of the Drawings**

Some embodiments of the disclosure will now be described in greater detail with reference to the accompanying diagrams, in which:

Figure 1 is a top perspective view of a mobile electronic device according to one embodiment in an opened position;

Figure 2 is a partial enlarged side perspective view of a top member of the device of Figure 1;

Figure 3 is a bottom perspective view of a base member of the device of Figure 1;

Figure 4 is an exploded view of some elements of a linkage mechanism of the device of Figure 1;

Figure 5 is a side view of a linkage of the device of Figure 1;

Figure 6 is a partial enlarged perspective cutaway view of the device of Figure 1, wherein the device is cut along the lines I-I in Figure 1;

Figure 7 is a partial enlarged cross-section side view of the device of Figure 1 taken along the line II-II in Figure 1;

Figure 8 is a partial enlarged cross-section side view of the device of Figure 1 wherein the cross-section is in the same plane shown in Figure 7;

Figure 9 is a side view of the device of Figure 1 in a first angled position;

Figure 10 is an enlarged side view of the device of Figure 1 in the first angled position;

Figure 11 is a side view of the device of Figure 1 in an intermediately opened position;

Figure 12 is a partial enlarged cross-section side view of the device of Figure 1 in the intermediately opened position, wherein the cross section is in the same plane shown in Figure 7;

Figure 13 is a side view of the device of Figure 1 in a second angled position;

Figure 14 is a reverse side view of the device of Figure 1 in the second angled position;

Figure 15 is a side view of the device of Figure 1 in a closed position;

Figure 16 is a partial enlarged cross-section side view of the device of Figure 1 in the closed position, wherein the cross section is in the same plane shown in Figure 7;

Figure 17 is a side view of a mobile electronic device according to another embodiment in an opened position;

Figure 18 is a top perspective view of a mobile electronic device according to another embodiment in an opened position;

Figure 19 is an exploded perspective view of a linkage mechanism of the device of Figure 18;

Figure 20 is a perspective view of the first linkage mechanism of Figure 19;

Figure 21 is a cross-section side view of the device of Figure 18 in the opened position taken along the lines III-III in Figure 18;

Figure 22 is a partial cross-section side view of the device of Figure 18 in a first angled position, wherein the cross section is in the same plane shown in Figure 21;

Figure 23 is a partial cross-section side view of the device of Figure 18 in an intermediately opened position, wherein the cross section is in the same plane shown in Figure 21;

Figure 24 is a cross-section side view of the device of Figure 18 in a closed position, wherein the cross section is in the same plane shown in Figure 21;

Figure 25 is an exploded perspective view of a mobile electronic device according to another embodiment;

Figure 26 is a top perspective view of the device of Figure 25 in a first operating configuration;

Figure 27 is a top perspective view of the device of Figure 25 wherein a top member and a base member of the device are in an opened position and an input member of the device is in a retracted position;

Figure 28 is a top perspective view of the device of Figure 25 in a second operating configuration; and

Figure 29 is a top perspective view of the device of Figure 25 in a third operating configuration.

**Detailed Description**

As described above, a mobile electronic device including interface elements such as a large touchscreen and/or a graphical display may typically include a single main body member and may not provide an opened or closed position to protect the interface elements of the device. Touchscreens, graphical displays, and/or other interface elements may become scratched and/or dirty if unprotected.

The term mobile electronic device as used herein includes, but is not limited to, mobile communication and/or computing devices such as "tablet" computers, internet browsing devices and other similar electronic devices.

As described herein, first and second body members of a device may be commonly referred to as top and base members respectively. Throughout the disclosure, movement of the device will be described from the point of view of the top member of the device moving with respect to a stationary base member. However, the terms "top member" and "base member", as well as their relative orientation described herein, are used for ease of description only. The device described herein is not limited to any particular orientation in use.

In some embodiments, the top member is a tablet computing device. The top member may include a touchscreen, graphical display, a keyboard and/or other interface elements. The term "interface elements" as used herein may include one or more interactive user interfaces such as a touch screen, keys, a control surface, etc. No particular one type of element described above is required to constitute interface elements as referred to herein. A graphical display could also be provided in combination with other interface elements or alone on a surface of the device as described above. It is to be understood that the term "interface elements" includes a sole graphical interface and embodiments are not limited to interface elements which accept input from a user.

The base member may be a protective cover for protecting interface elements (such as a touchscreen) on the top member. In some embodiments, the base member may also include interface elements, although the specific example embodiments described herein with reference to the figures do not include interface elements on the base member.

For a tablet computing device having a protective cover, the term "opened position" may refer, for example, to a position in which a surface of the tablet computing device having a touchscreen, display or other interface elements is accessible. The protective cover may cover the opposite surface of the tablet computing device in an opened position. The term "closed position" may refer, for example, to a position in which the protective cover is covering the surface having a touchscreen, display or other interface elements, thus rendering the surface inaccessible.

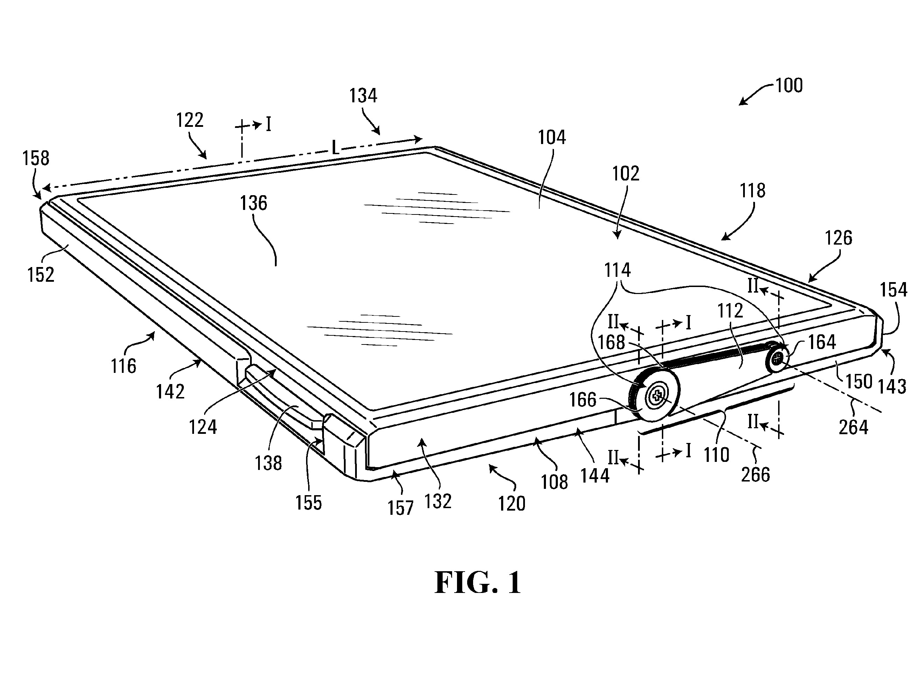

An example embodiment of the device according to the disclosure will now be explained with reference to Figures 1 to 16.

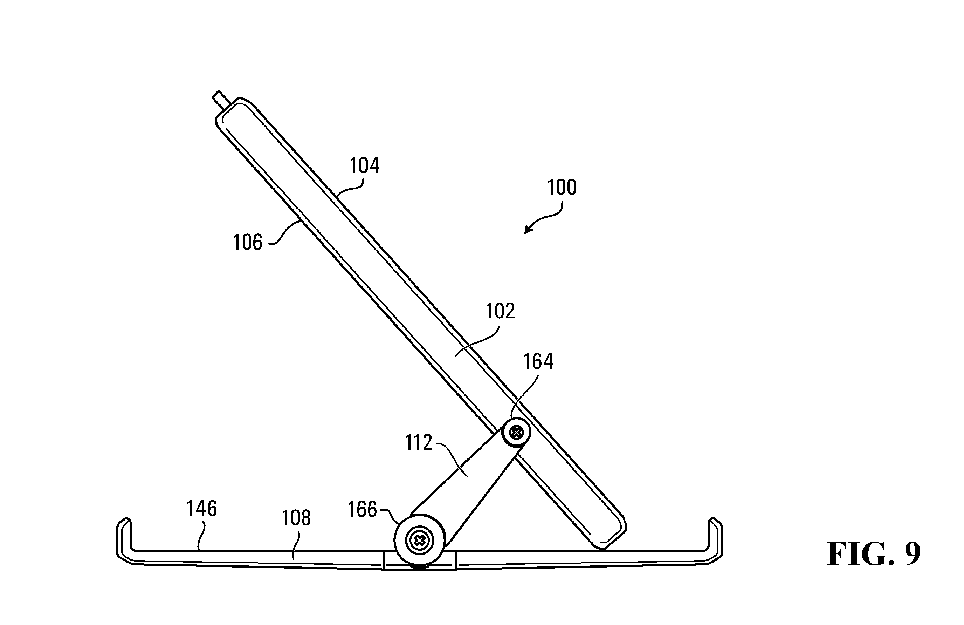

Figure 1 is a top perspective view of a mobile electronic device 100 according to one embodiment. The device 100 is shown in a first position in Figure 1. The device 100 can be moved to a second position, as will be discussed below. The first and second positions of the device 100 may be referred to as opened and closed positions respectively. The device 100 includes a top member 102 having a first top member surface 104 and a second top member surface 106 (shown in Figures 9 to 16) opposite to the first top member surface 104. The device 100 also includes a base member 108. The device 100 further includes at least one linkage mechanism (including the linkage mechanism 110) coupling the top member 102 and the base member 108 such that device 100 may be moved between the opened position and the closed position. The linkage mechanism 110 includes a linkage 112 intermediate the top member 102 and the base member 108. The linkage mechanism 110 also includes a motion constraint mechanism 114 that constrains movement of the top member 102 with respect to the base member 108 between the opened and closed positions to a pre-defined rotational and translational path, the rotational and translational path being defined by rotation of the top member 102 with respect to the base member 108 and counter-rotation of the linkage 112 with respect to the base member 108. When the device 100 is in the opened position, the top member 102 overlies the base member 108 with the second top member surface 106 facing toward the base member 108 (i.e. the second top member surface 106 is covered by the base member 108). The first top member surface 104 is accessible and faces away from the base member 108. When the device 100 is in the closed position, the top member 102 overlies the base member 108 with the first top member surface 104 facing toward the base member 108 (i.e. the first top member surface 104 is covered by the base member 108 in this embodiment). The second top member surface 106 is accessible and faces away from the base member 108.

As will be described below, the motion constraint mechanism 114, in this embodiment, includes a pulley system intermediate the top member 102 and the base member 108. However, as is also discussed below, various other types of motion constraint mechanisms may be used, and the pulley system is provided herein only as an example. For example, the motion constraint mechanism may include a gear system, a sprocket system, a rack and pinion system. For example, a rack and pinion system could include two racks attached to the base member and a pinion fixed to the top member that is coupled to the two racks. In embodiments including a pulley system, the pulley system may be arranged differently than the system described below. For example, more or less pulleys may be used, and the positioning, size, and type of pulleys used may vary.

The linkage mechanism 110 described herein provides a controlled movement of the device 100 wherein, whenever the device 100 is opened or closed, the movement of the top member 102 is constrained such that the top member 102 transcribes the same translational and rotational path throughout the entire movement between the opened position and the closed position. The motion constraint mechanism 114 transfers the rotation of the top member 102 to the counter-rotation of the linkage 112. The motion constraint mechanism 114 also transfers the counter-rotation of the linkage 112 to the rotation of the top member 102. Thus, the motion control mechanism 114 couples the rotation of the top member 102 with the counter-rotation of the linkage 112.

The result of this rotational coupling is that, for any point of the rotation of the top member 102 with respect to the base member, the translational position of the top member 102 is defined. Thus, the top member 102 follows a unique, pre-determined or pre-defined rotational and translational path for movement between the closed and opened positions. In this embodiment, the pre-defined path of the top member includes approximately 180 degrees or rotation with respect to the base member with the top member 102 being in approximately the same lateral position in both the opened position and the closed position. This pre-defined path is described in more detail below. The path may vary in other embodiments. For example, the rotation of the top member, and/or its relative positioning in the opened and closed positions may be different.

The device 100, including linkage mechanism 110, is provided as an example. The specific structural details of the top member 102, the base member 108 and the linkage mechanism 110 shown in Figure 1 and described below are not necessarily present in other embodiments.

The device 100 has a first device end 116, an opposite second device end 118, a first device side 120 and an opposite second device side 122. The distance from the first device end 116 to the second device end 118 is referred to herein as the length of the device 100. The distance from the first device side 120 to the second device side 122 is referred to herein as the width of the device. In this embodiment, the length of each of the top member 102 and the base member 108 is approximately equal to the length of the device 100, although the base member 108 has a slightly longer length than the top member 102, as will be discussed below.

The direction extending from the first device end 116 to the second device end 118 is referred to herein as the forward direction and the opposite direction is referred to herein as the backward direction. The direction extending perpendicularly away from the base member 108 toward the top member 102 is referred to herein as the upward direction and the opposite direction is referred to herein as the downward direction. An orientation in the upward and/or downward direction may be referred to as vertical. These directions are used herein for ease of description only and do not limit the orientation of the device during use.

In this embodiment, the top member 102 is a generally rectangular member having two substantially flat, opposite surfaces, namely the first top member surface 104 and the second top member surface 106 (shown in Figures 9 to 16). The top member has a first top member end 124, an opposite second top member end 126, a first top member side 132 and an opposite second top member side 134. Figure 1 shows a length L of the top member 102 between the first top member end 124 and the second top member end 126.

The top member 102 may include interface elements. For example, in this embodiment, the first top member surface 104 includes a touchscreen 136 that covers most of the first top member surface 104. In other embodiments, the touchscreen is omitted and one or more different interface elements are present instead. For example, in some embodiments, the first top member surface 104 includes a graphical display, a keyboard and/or other interface elements. In this embodiment, the second top member surface 106 has no interface elements. However, in other embodiments, one or more interface elements are present on both the first and second top member surfaces 104 and 106 of the top member, or possibly, only on the second top member surface 106.

In some embodiments, the top member includes a means on the first top member end 124 and/or the second top member end 126 to provide an accessible location for a finger to grip the top member 102 in order to move the device from either the opened position or the closed position. For example, the embodiment shown in Figure 1 includes a flange 138 that extends from the first top member end 124. However, the flange 138 is optional and may be omitted.

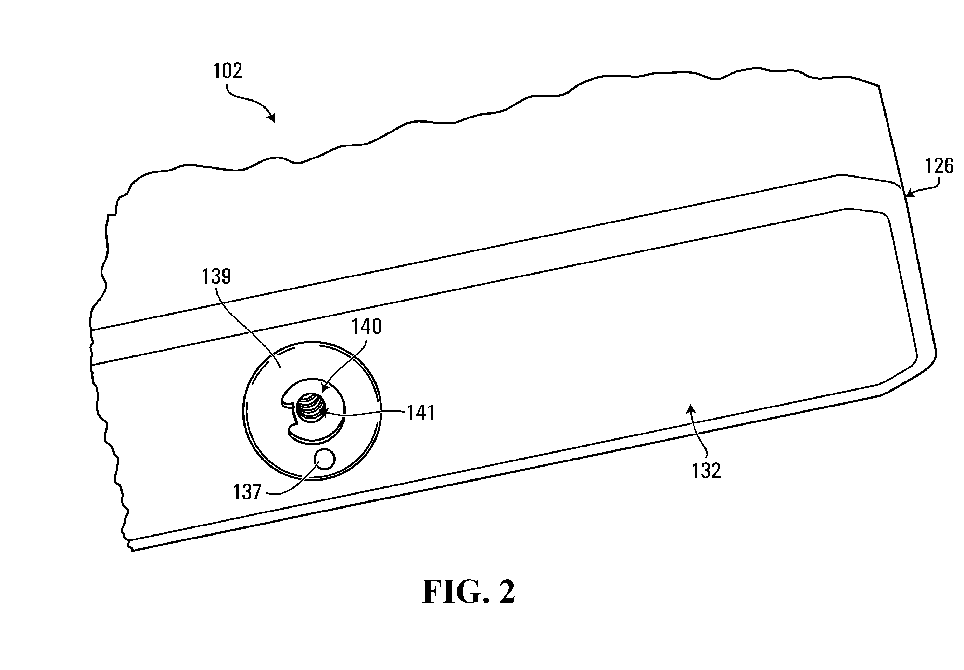

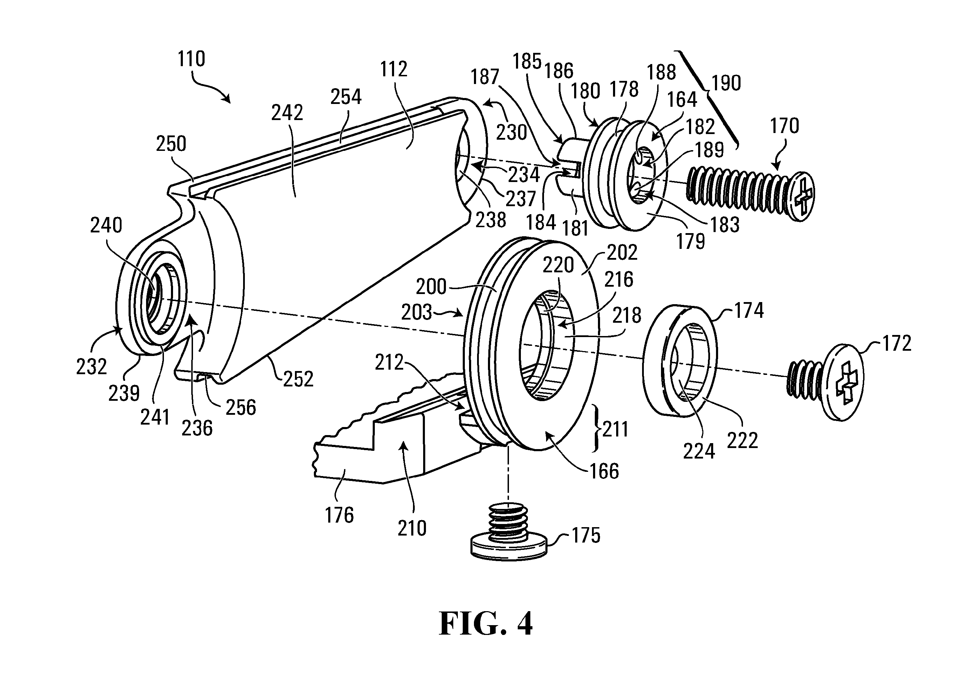

To connect the linkage mechanism 110 to the top member 102, figure 2 shows a partial enlarged side perspective view of the top member 102. As seen in Figure 2, the top member 102, in this embodiment, includes a circular section 139, which protrudes outward slightly from the first top member side 132. The circular section 139 is located less than one quarter of the length L (shown in Figure 1) from the second top member end 126. A pulley interlock recess 140 is centrally located in the circular section 139. The pulley interlock recess 140 is discussed below (with reference to Figure 4) in more detail. A top member threaded hole 141 is centrally located in the pulley interlock recess 140. Although not shown, a corresponding mirrored copy of the circular section 139, including the pulley interlock recess 140 and the top member threaded hole 141, is located on the second top member side 134 in this embodiment. As will be discussed below, the circular section 139, the pulley interlock recess 140 and the top member threaded hole 141 are for connecting the linkage mechanism 110 to the top member 102. The linkage mechanism 110 may be attached to the top member 102 in various ways, and the threaded hole 141 and the pulley interlock recess 140 are provided only for an example of how and where the linkage mechanism 110 may be attached to the top member 102.

Figure 2 also shows a top member magnet 137, which will be described in further detail below. The top member magnet 137 is inset in the circular section 139 so as not to protrude out from the circular section 139. The top member magnet 137 is optional and, in other embodiments, may be omitted.

Turning back to Figure 1, the base member has a first base member end 142, an opposite second base member end 143, a first base member side 157 and an opposite second base member side 158.

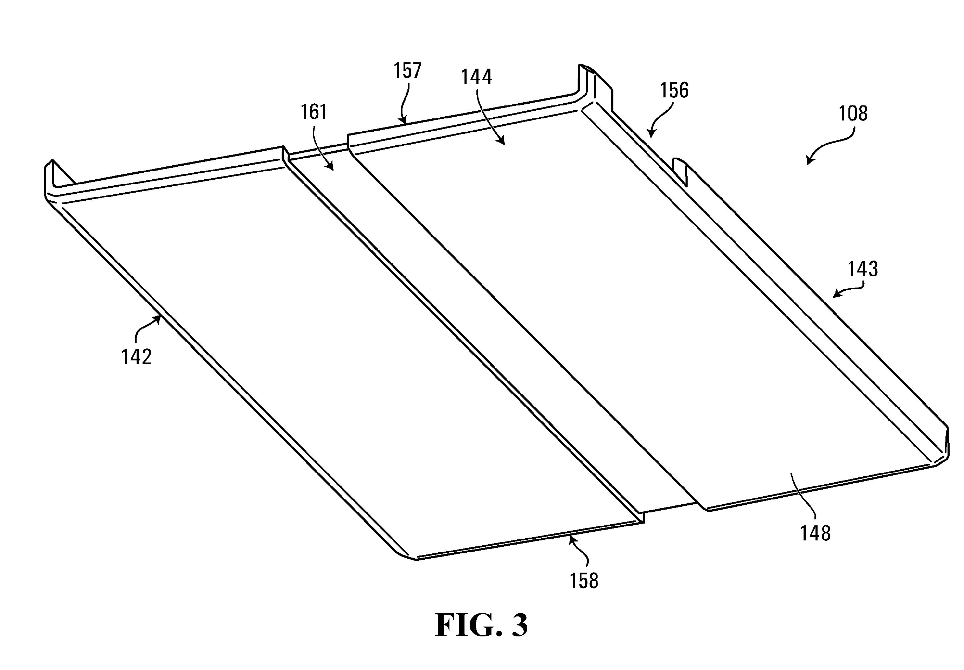

In some embodiments, the base member is a protective cover. For example, in the embodiment shown in Figure 1, the base member 108 includes a substantially flat protective cover section 144 (also shown in Figure 3) that is shaped to cover the first top member surface 104 and the second top member surface 106 of the top member 102 depending on whether the device 100 is in the opened position or the closed position. The cover section 144 has a first cover surface 146 (shown in Figures 9 and 10 to 16) and an opposite second cover surface 148 (shown in Figure 3). The base member 108 further includes a first end cover 152 and a second end cover 154 which extend upward from the first base member end 142 and the second base member end 143 respectively. The first end cover 152 and the second end cover 154 are shaped to cover the first top member end 124 and the second top member end 126 when the device 100 is in the closed position and when the device 100 is in the opened position. The first end cover 152 and the second end cover 154 provide clearance for the top member 102 as the device 100 is moved between the opened position and the closed position. Thus, the base member 108 is longer than the top member 102 by slightly more than the total thickness of the first end cover 152 and the second end cover 154. The first end cover 152 and the second end cover 154 are provided with a first recess 155 and a second recess 156 (shown in Figure 3) respectively that are shaped and positioned to provide clearance for the flange 138 and to provide room for the user of the device 100 to place a finger under the flange 138 to either open or close the device 100. One skilled in the art will appreciate that the base member 108 could alternatively not include the first end cover 152 and the second end cover 154.

In other embodiments, the base member is a different size or shape than the base member 108 shown in Figure 1. For example, in some embodiments, the base member is smaller than and/or offset from the first and second top member surfaces such that the base member does not completely cover the first or second top member surface. In some embodiments the base member includes a window or other cut-out or opening such that the first top member surface 104 and the second top member surface 106 are visible and/or accessible through the base member 108. Numerous other variations are also possible.

Figure 3 is a partial enlarged bottom perspective view of the base member 108. As shown in Figure 3, in this example embodiment, the second base member surface 148 is provided with a base member groove 161 that extends from the first base member side 157 to the second base member side 158. The base member groove 161 is located centrally between the first base member end 142 and the second base member end 143. As will be described below, the base member groove 161 is provided in this embodiment for the purpose of attaching pulleys to the base member. However, in other embodiments the base pulley is attached by other means, and still other embodiments do not include any pulleys. Thus, in other embodiments, the base member groove 161 is omitted.

Turning back to Figure 1, in some embodiments, the ends and sides of the top member and base member of the device are not completely flat. For example, in the embodiment shown in Figure 1, the top member end 124, the second top member end 126, the first top member side 132 and the second top member side 134 are bevelled. However, the top member and the base member may be differently shaped. For example, the ends and sides of the top and base members could be rounded in other embodiments.

In this embodiment, the top member 102 and the base member 108 have approximately the same width and similar lengths. However, in other embodiments, the top member and the base member are not similarly shaped in this manner. Various configurations of the top and base members of the device according to the disclosure are possible. For example, the base member may not completely cover either of the surfaces of the top member. In some embodiments, the sides and/or ends of the base member is a protective cover that may wrap up the sides and/or ends of the top member, leaving just one of the first and/or second top member surfaces exposed when it is stowed. In some embodiments, the base member is not removable from the device. In other embodiments, the base member is an optional accessory. If the base member is sold as an optional accessory, it may be adapted, along with the linkage mechanism, to be attachable to, and possibly removable from, the top member (e.g. a snap on/off feature).

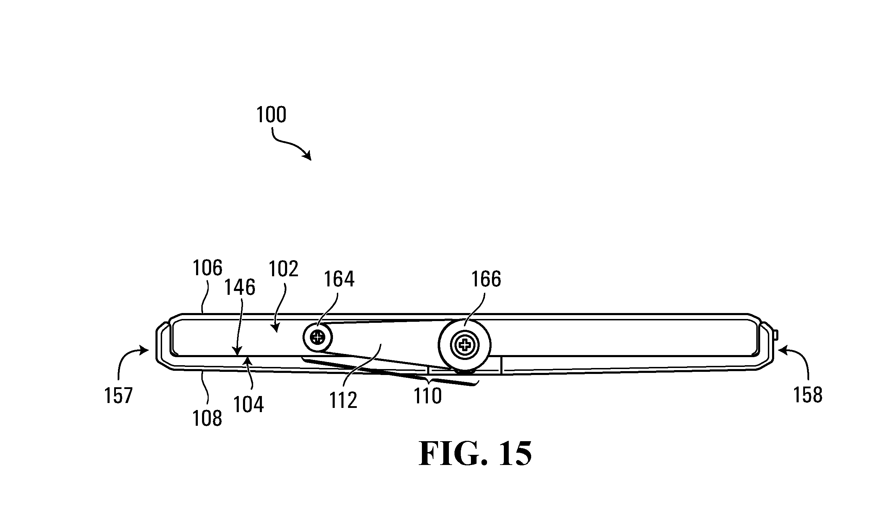

In this embodiment, the top member 102 and the base member 108 are substantially aligned in each of the opened position (shown in Figure 1) and the closed position (shown in Figure 15). However, in other embodiments, the top member and the base member are not substantially aligned, either due to the relative sizes and/or positions of the top and base members.

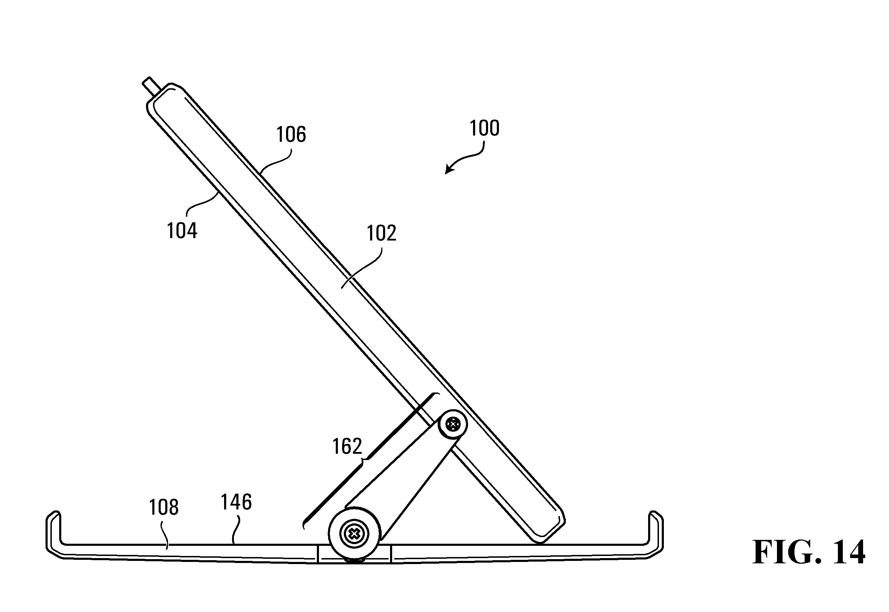

The at least one linkage mechanism 110 includes two or more linkage mechanisms in some embodiments. Some embodiments include a pair of linkage mechanisms, wherein each linkage mechanism is at a respective side of the device. For example, in this embodiment, the linkage mechanism 110 is a first linkage mechanism that is located on the first device side 120. A second linkage mechanism 162 (shown in Figure 14), which mirrors the linkage mechanism 110 in form and function, is located at the second device side 122. However, in other embodiments, only one linkage mechanism is provided rather than a mirrored pair of linkage mechanisms. For example, a linkage mechanism could be provided on one side of the device while a simple bar, band, or other type of linkage could be used on the opposite side of the device. As another example, a single linkage mechanism could be located centrally along the width of the device. In still other embodiments, more than two linkage mechanisms are provided. In embodiments in which a pair of linkage mechanisms is provided, one of the pair of linkage mechanisms does not necessarily mirror the other in form and/or function.

For simplicity, only the linkage mechanism 110 on the first device side 120 will be described in detail herein. The linkage mechanism 110 is shown by way of example only, and other embodiments employ different linkage mechanisms rather than the linkage mechanism 110 shown in Figure 1.

Elements of the linkage mechanism 110 of this embodiment will now be discussed in greater detail with reference to Figures 1, 4 and 5.

The linkage mechanism 110 shown in Figure 1 includes the linkage 112 and the motion constraint mechanism 114. In some embodiments, the motion constraint mechanism 114 includes a first node, a second node, and a rotation transfer mechanism. The first node may be fixedly attached to the first device side 132, the linkage 112 being rotatably coupled to the top member at the first node. The second node may be fixedly attached to the first base member side 157, the linkage 112 being rotatably coupled to the base member 108 at the second node. The linkage, in this embodiment, has a fixed length, although some embodiments may employ linkages that have varying lengths. For example telescoping linkages, or linkages which have dynamic points of connection to the top and/or base members, thereby changing the linkage length, may be employed in some embodiments. The rotation transfer mechanism may be adapted to rotationally couple the first node and the second node to thereby transfer the rotation of the top member 102 to the counter-rotation of the linkage 112 and vice versa.

The first node may have a perimeter about an axis of rotation of the top member (where the linkage is rotatably coupled to the top member), and the second node may have a perimeter about an axis of rotation of the linkage (where the linkage is rotatably coupled to the base member). For example, each of the first and second nodes may include a pulley, gear or sprocket. The first and second nodes, however, are not restricted to elements having a circular cross-section, and other elliptical, oval, or otherwise shaped elements having a perimeter may be used. The rotation transfer mechanism may include a flexible link that is wrapped around at least a portion of each of the perimeters of the first node and the second node, and which is anchored to each of the first and second nodes such that the flexible link cannot slip or shift with respect to the perimeter. In some embodiments, a slip prevention mechanism such as an anchor may be used to prevent such slipping or shifting. The flexible link may be a line of a pulley system (such as a tension wire or belt) that is at least partially wrapped around the pulleys. In the case of a sprocket system, the flexible link could be a chain at least partially wrapped around the sprockets. The flexible link could also be any other suitable element for rotatably coupling the first and second nodes. In the case of the sprockets and the chain, the interaction between teeth of the sprocket and the chain may prevent shifting or slipping of the chain with respect to the sprockets. In the case of pulleys and a wire, screws or other anchoring means may be employed to anchor the wire to the pulleys. In other embodiments, the tension of the wire may be sufficient that the friction between the wire and the pulleys may provide a sufficient anchor.

In some embodiments, as described above, the motion constraint mechanism 114 includes a pulley system, wherein the first and second nodes are pulleys. For example, in this embodiment, a first pulley 164 (shown in Figure 4) of the pulley system forms the first node that is fixedly attached to the first top member side 132, the linkage 112 being rotatably coupled to the top member 102 at the first node. A second pulley 166 (shown in Figure 4) of the pulley system forms a second node that is fixedly attached to the first base member side 157, the linkage 112 being rotatably coupled to the base member 108 at the second node.

In this embodiment, the flexible link forming the rotation transfer mechanism is the tension wire 168 (shown in Figure 1) of the pulley system. As will also be described below, the tension wire 168 is anchored to the first pulley 164 and the second pulley 166 to prevent slippage or lateral movement of the tension wire with respect to the first and second pulleys 164 and 166. The tension wire 168 is provided as an example line for a pulley system. Any line for use with pulleys that can maintain the sufficient tension may be used. For example, the line, in some embodiments, may be a belt, rope, cable etc. Embodiments are not limited to any particular type of line for coupling the pulleys.

The pulley system described with reference to Figures 1 to 16 is only one example of a possible motion constraint mechanism. One skilled in the art will appreciate that many variations to the mechanism described herein may be made while maintaining the same or similar functionality.

Figure 4 is an exploded view of some elements of the linkage mechanism 110. Figure 4 shows the linkage 112, the first pulley 164 and the second pulley 166. Figure 4 also shows a first screw 170, a second screw 172, a stepped bush 174, an anchor screw 175, and a pulley support strip 176.

The first pulley 164, in this example, is a circular pulley with a first groove 178 extending around its circumference. The first groove 178 is sufficiently wide for the tension wire 168 to be wrapped around the first pulley 164 twice without the tension wire 168 overlapping itself. The first pulley 164 includes a first pulley outer face 179 and a first pulley inner face 180 opposite to the outer face 179.

In this particular example, the first pulley 164 includes a first pulley stepped hole 182 (i.e. a hole with a larger diameter portion 183 and a smaller diameter portion 184). The first pulley stepped hole 182 extends from the first pulley outer face 179 completely through the first pulley. The large diameter portion 183 of the first pulley stepped hole 182 extends inward from the first pulley outer face 179 partially through the first pulley 164. The diameter of the stepped hole 182 then changes to a smaller diameter and the smaller diameter portion 184 extends the rest of the way through the first pulley 164 to the first pulley inner face 180. The first pulley stepped hole 182 is sized to allow the first screw 170 to attach the first pulley 164 to the top member 102 such that the first screw 170 does not protrude from the first pulley outer face 179 when assembled.

The first pulley 164 includes a first pulley shaft 181 that extends from the first pulley inner face 180 and terminates at a first pulley shaft face 185, which is substantially flat. In this example, the first pulley shaft 181 has a diameter that is less than the diameter of the first pulley inner face 180. The first pulley shaft 181 is generally circular with the smaller diameter portion 184 of the first pulley stepped hole 182 extending through its length. The first pulley shaft 181 includes an end portion 186 with a cut-out 187 that extends along a small portion of the circumference of the first pulley 164 through to the first pulley stepped hole 182. The pulley interlock recess 140 (shown in Figure 2) is shaped to receive the end portion 186 of the first pulley shaft 181.

In this example embodiment, the first pulley 164 includes a first wire hole 188 and a second wire hole 189. When the first pulley 164 is in the orientation shown in Figure 1, which is the orientation of the first pulley 164 when the device 100 is in the opened position, the first wire hole 188 extends from the larger diameter portion 183 of the stepped hole 182 upward to the first groove 178. The second wire hole 189 extends from the larger diameter portion 183 of the stepped hole 182 downward to the first groove 178. The first wire hole 188 and the second wire hole 189 are approximately concentric. The first wire hole 188 and the second wire hole 189 will collectively be referred to herein as simply the wire hole 190, which extends straight through the first pulley 164. The wire hole 190 is located off-centre with respect to a circular cross-section of the first pulley 164. The wire hole 190 is sized to receive the tension wire 168 (shown in Figure 1). As will be explained below, the wire hole 190 provides a means to anchor the tension wire 168 to the first pulley. However, one skilled in the art will appreciate that other methods of anchoring the tension wire 168 could be implemented in other embodiments. For example, the wire hole 190 could include a narrow section which places sufficient frictional force on the tension wire 168 to hold the tension wire 168 in place. Alternatively, the tension wire 168 could be welded to the first pulley 164 or attached with an adhesive, for example.

The second pulley 166, in this example embodiment, is a circular pulley that includes a second groove 200 that extends around the circumference of the second pulley 166. The second groove 200 is sized such that the tension wire 168 can wrap around the second pulley 166 in the second groove 200. As described above, various means may be provided in other embodiments to attach the pulleys to the base member 108. In this particular example, the pulley support strip 176 is provided, which is shaped to fit in and be attached to the base member groove 161 (shown in Figure 3). The pulley support strip 176 has an end 210 that covers the first base member side 157 (shown in Figure 3). The second pulley 166 is parallel to the first device side 120 (shown in Figure 1). The second pulley 166 is formed integral to and extends upward from the end 210 of the pulley support strip 176 with sufficient clearance for the linkage 112 to be received both between the second pulley 166 and the base member 108 and between the second pulley 166 and the top member 102. In particular, the second pulley 166 has a second pulley outer face 202 and a second pulley inner face 203 opposite to the second pulley outer face 202. The second pulley 166 has a lower portion 211, which is attached to the end 210 of the pulley support strip 176 by an extension 212 from the second pulley inner face 203 to the end 210 of the pulley support strip 176.

The second pulley 166 includes a second pulley stepped hole 216 that is centrally located with respect to the second pulley outer and inner faces 202, 203. A larger diameter portion 218 of the second pulley stepped hole 216 extends inward from the second pulley outer face 202. The diameter of the second pulley stepped hole 216 changes and a smaller diameter portion 220 extends the rest of the way to the second pulley inner face 203. The stepped bush 174 includes a wide bush portion 222 and a narrow bush portion 224. The wide bush portion 222 and the larger diameter portion 218 of the second pulley stepped hole 216 are shaped such that the wide bush portion 222 fits within the larger diameter portion 218 of the second pulley stepped hole 216.

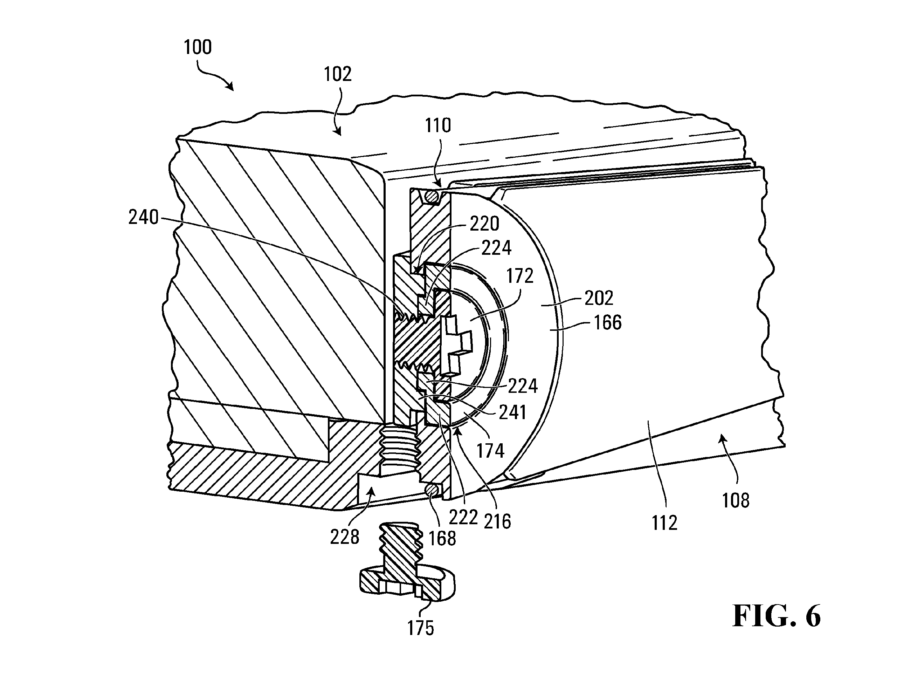

An anchor screw hole 228 (shown in Figure 6) extends upward into the lower pulley portion 211 and is adapted to allow the anchor screw 175 to anchor the tension wire 168 to the second groove 200.

In some embodiments, a ratio of the diameter of the second pulley 166 to the diameter of the first pulley 164 is greater than, but close to 2:1. As will be explained below, the ratio may be greater than, but close to 2:1 so that proper rotation of the top member 102 and the linkage 112 with respect to the base member 108 is achieved when the device is opened or closed. In this particular embodiment, the diameter of the first pulley 164 is approximately 3.5 mm and the diameter of the second pulley 166 is approximately 7.16 mm. The mathematical relationship of the relative diameters of the first pulley 164 and the second pulley 166 to the desired movement of the device 100 is discussed in more detail below.

The particular shape, size, groove type, and other structural details of the first pulley 164 and the second pulley 166 may vary. The specific first pulley 164 and second pulley 166 described herein are provided as examples. Any suitable pulley for coupling rotation from one member to another may be used. In some embodiments, pulleys having oval or otherwise non-circular shapes are used. If non-circular pulleys are employed, the mathematical relationship described below may require suitable alteration. As another example, the pulleys may have a V-shaped groove or any other suitable groove shape.

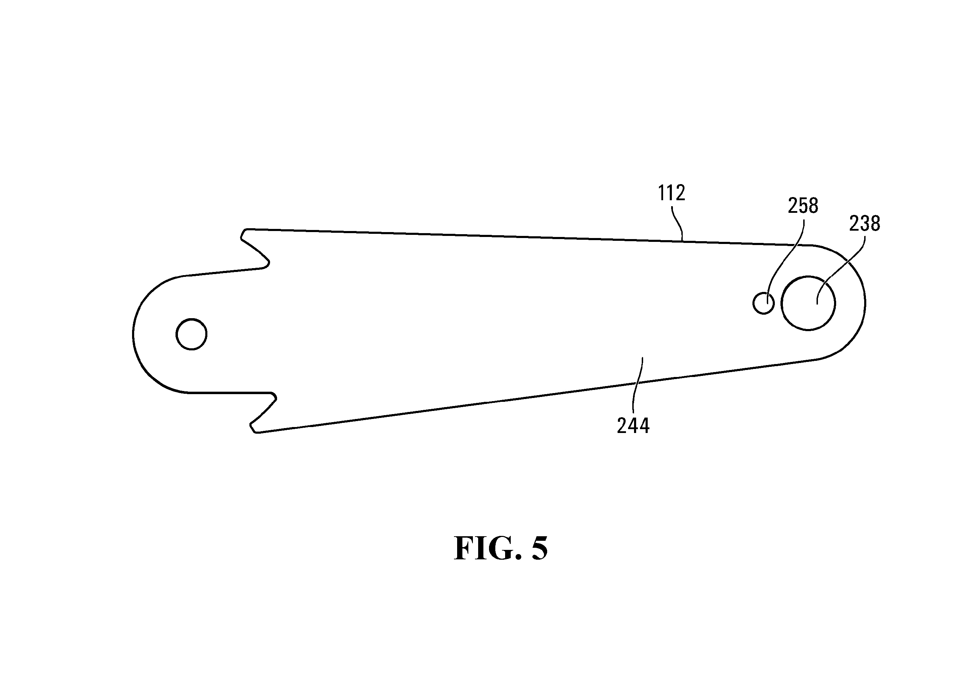

The linkage 112 is an elongated member having a first linkage end 230 and a second linkage end 232. The linkage also has an outer linkage surface 242 and an inner linkage surface 244 (shown in Figure 5) opposite to the outer linkage surface 242. The linkage 112, in this example, is not flexible and does not bend or change length. A first linkage end section 234 is located at the first linkage end 230. A second linkage end section 236 is located at the second linkage end 232. Each of the first linkage end section 234 and the second linkage end section 236 is generally flat and indented from the outer surface 242. The first linkage end section 234 and the second linkage end section 236 are indented to provide clearance for the first pulley 164 and the second pulley 166. The first linkage end section 234 has a first rounded end edge 237 and a first linkage hole 238. The first linkage hole 238 is shaped to receive the first pulley shaft 181 such that the linkage 112 is rotatable about the first pulley shaft 181. The length of the first pulley shaft 181 is greater than the thickness of the first linkage end section 234, such that the end portion 186 of the first pulley shaft 181 protrudes through the first linkage end section 234 when assembled.

The second linkage end section 236 has a second rounded end edge 239, similar to the first linkage end section 234. The second linkage end section 236 has a second linkage hole 240 which is threaded and shaped to receive the second screw 172.

The second linkage end section 236 includes a lip 241 which is circular and centered around the second linkage hole 240. The lip 241 protrudes outward slightly from the linkage end section 236. The lip 241 is shaped to fit within the smaller diameter portion 220 of the second pulley stepped hole 216, and the narrow bush portion 224 of the stepped bush 174 is shaped to fit within the lip 241.

The linkage 112 further includes a first grooved edge 254 and a second grooved edge 256. The first grooved edge 254 and the second grooved edge 256 are shaped such that the path of the tension wire 168 (shown in Figure 1) passes through the first grooved edge 254 and the second grooved edge 256 when the tension wire 168 is arranged around each of the first pulley 164 and the second pulley 166. Thus, the first grooved edge 254 and the second grooved edge 256 act as a guard for the tension wire 168 that may prevent a finger of a user from touching the tension wire 168. The first grooved edge 254 and the second grooved edge 256 may also prevent the tension wire from moving out of alignment with the first pulley 164 and the second pulley 166. The linkage 112, in other embodiments, may be a simple straight bar with no protective grooves or other details described above. Any linkage that may be rotatably coupled and has a fixed length (to maintain a constant distance between the first and second node) may be suitable.

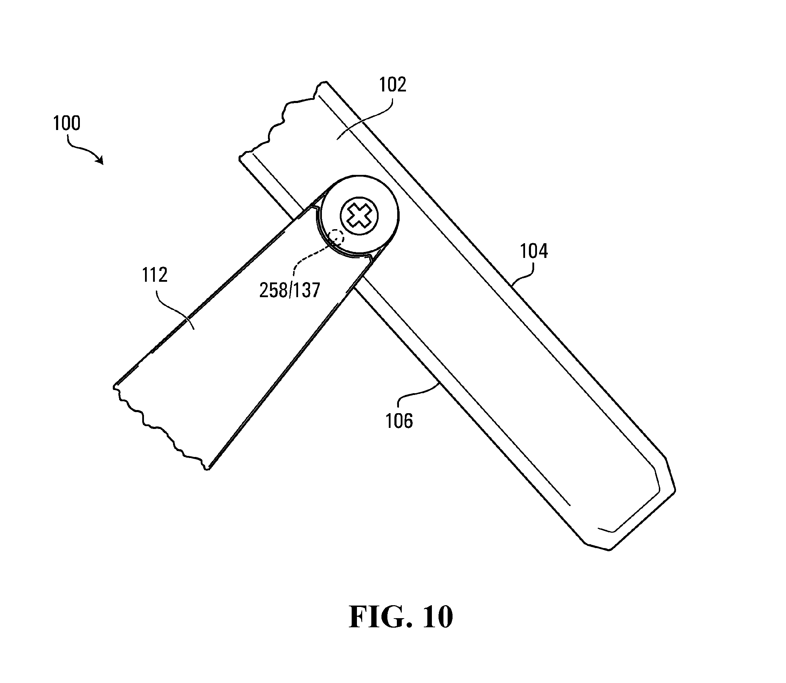

Figure 5 is a side view of the linkage 112 showing the inner linkage surface 244. In this embodiment, the linkage 112 includes a linkage magnet 258. The linkage magnet 258 is inset in the inner linkage surface 244 of the linkage 112 so as to be flush with the inner linkage surface 244. The linkage magnet 258 is omitted in other embodiments. The linkage magnet 258 and the top member magnet 137 (shown in Figure 2) have polarities such that, when the device is assembled as described below, the linkage magnet 258 and the top member magnet 137 will be magnetically attracted to each other when aligned. In this embodiment, the top member magnet 137 and the linkage magnet 258 are arranged in the top member 102 and the linkage 112 respectively, such that they will be aligned when the device 100 is in the first angled position shown in Figures 9 and 10. As will be explained below, both the top member magnet 137 and the linkage magnet 258 are optional and are omitted in other embodiments.

The assembly of the device 100 will now be explained with reference to Figures 1 to 8.

The first pulley shaft 181 (shown in Figure 4) is received in the first linkage hole 238 (shown in Figure 4) and in the pulley interlock recess 140 (shown in Figure 2). More particularly, the first pulley end portion 186 (shown in Figure 4) is received in the pulley interlock recess 140. The first screw 170 (shown in Figure 4) is received in the first pulley stepped hole 182 (shown in Figure 4) and is tightened into the top member threaded hole 141. The first pulley 164 is thus axially fixed in place on the top member 102 (shown in Figure 1) by the first screw 170. The first pulley 164 is rotationally fixed to the top member 102 by the interaction between the pulley interlock recess 140 and the first pulley end portion 186. The linkage 112 (shown in Figure 4) is rotatably coupled to the top member 102 via the first pulley shaft 181. The circular section 139 (shown in Figure 2) ensures that the linkage 112 has a slight clearance from top member 102 during movement. The first pulley 164 is fixed to the top member 102 such that the wire hole 190 (shown in Figure 4) is vertical and offset in the forward direction when the device 100 is in the opened position. In this embodiment, the first pulley 164 is also located centrally within the thickness of the top member 102. In other embodiments, however, the first pulley is located off-centre with respect to the thickness of the top member.

The pulley support strip 176 (shown in Figure 4) is received in and affixed to the base member groove 161 (shown in Figure 3). The pulley support strip 176 may be affixed in any suitable manner including, but not limited to, one or more screws, an adhesive, welding, etc.

Figure 6 is a partial enlarged perspective cutaway view of the device 100, wherein the device 100 is cut along the lines I-I in Figure 1. The anchor screw 175 is shown in an exploded position. As shown in Figure 6, the stepped bush 174 is received in the second pulley stepped hole 216 from the second pulley outer face 202, and the lip 241 of the linkage 112 is received in the second pulley stepped hole 216. The narrow bush section 224 meshes with the lip 241 of the linkage 112 in the narrow portion 220 of the stepped hole 216. The second screw 172 is tightened in the second linkage hole 240 and holds the stepped bush 174 together with the linkage 112. The second screw 172, the lip 241 and the stepped bush 174 rotate together with respect to the second pulley 166. Thus, the linkage 112 is rotatably coupled to the base member 108 at the second pulley 166. The anchor screw 175 is received in the anchor screw hole 228 to anchor the tension wire 168 to the second pulley 166.

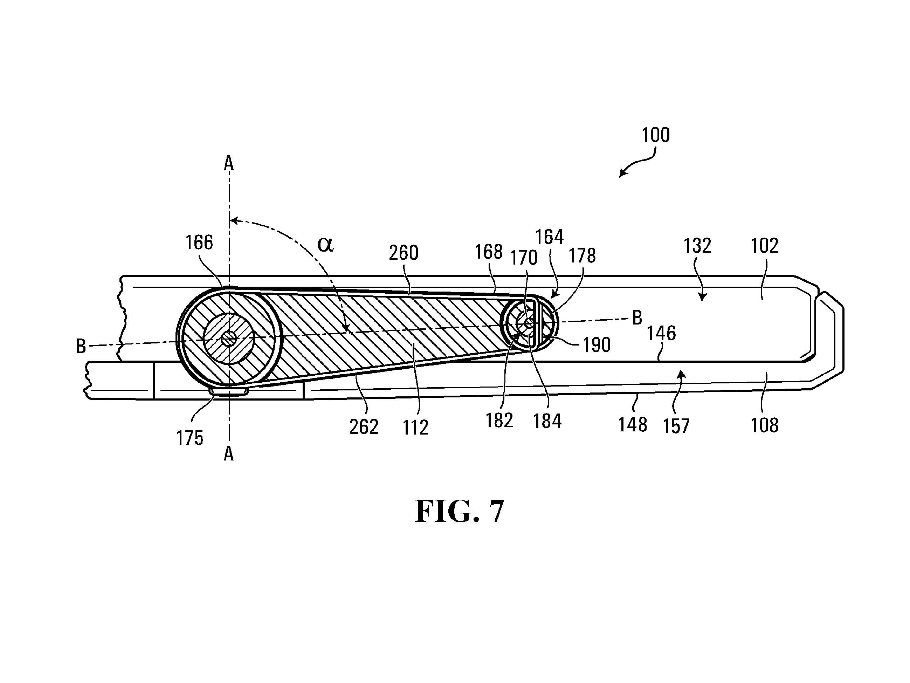

Figure 7 is partial cross-section side view of the device 100 taken along the line II-II in Figure 1. The cross-section is taken through each of the first pulley 164 and the second pulley 166 so that the arrangement of the tension wire 168 is visible. Figure 7 shows a plane, indicated by the line A-A, which is perpendicular to the first cover surface 146 of the base member 108. A line B-B indicates an axis which travels lengthwise along the linkage 112. The angle $\alpha$ between the lines A-A and B-B may be slightly less than 90 degrees when the device is in the opened position. In this embodiment, the angle $\alpha$ is approximately 86 degrees. As will be discussed below, the angle $\alpha$ indicates half of the angular rotation of the linkage 112 during movement of the device between the closed and opened positions. The exact angle $\alpha$ will vary depending on the dimensions of the device 100 and the arrangement of the pulley system. Thus, embodiments are not limited to any specific angle $\alpha$ or pulley diameters.

As shown in Figure 7, the first pulley 164 and the second pulley 166, in this embodiment, each have a diameter which is less than the combined thickness of the top member 102 and the base member 108. Thus, when the device 100 is in the opened position and in the closed position the linkage mechanism 110 does not protrude above or below the first device side 120 (i.e. does not protrude above the top member 102 or below the base member 108). In other embodiments, however, the pulleys have different sizes and one or both of the first and second pulleys may protrude above the top member 102 or below the base member 108.

Turning back to Figure 1, the first node and the second node (i.e. the first pulley 164 and the second pulley 166 in this embodiment) may be fixed to the top member 102 and the base member 108 in positions that will provide sufficient clearance between the first node and the base member 108 for the top member 102 to rotate between the opened and closed positions. Specifically, as will be discussed below, the portion of the top member 102 between the first node and the second top member end 126 will pass between the first node and the base member 108 during the movement.

In this embodiment, the second node (i.e. the second pulley 166) is fixedly attached to the first base member side 157 approximately centrally between the first base member end 142 and the second base member end 143. The first node (i.e. the first pulley 164), in this embodiment, is fixedly attached to the top member side 132 slightly less than one quarter of the length L (shown in Figure 1) from the second top member end 126. This positioning of the first node provides a distance between the first node and the second node that is over one quarter of the length L. Thus, the distance between the first node and the second node is greater than the distance from the first node to the second top member end 126. As will be discussed below, this positioning provides the required clearance for the top member 102 in this embodiment.

In some embodiments, the first node may be located more than one quarter of the length from the second top member end. However, to provide sufficient clearance for the top member rotation, the base member may include a curved or otherwise shaped recess. In some embodiments, the linkage may be adapted to increase in length during the rotation of the top member to provide the necessary clearance.

However, the positioning of the first node and the second node on the top member 102 and the base member 108 is not limited to the specific positions described above. For example, if the second node is located centrally, as described above, the first node may be positioned closer to, and possibly at, the second top member end. By contrast, in some embodiments, the second node is not centrally located on the side of the base member, and the location of the first node may change accordingly to provide sufficient clearance for rotation of the top member.

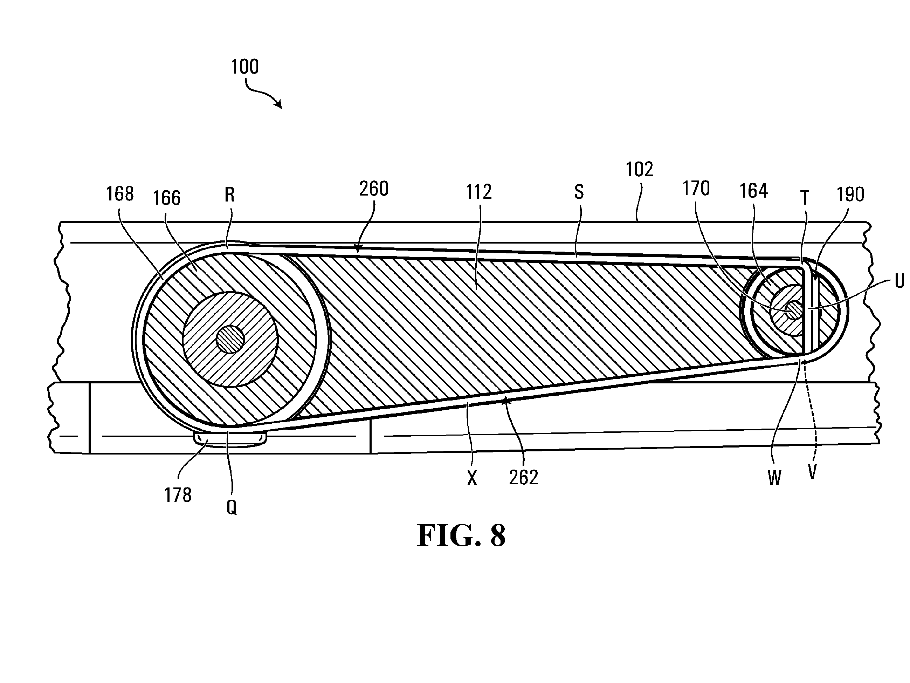

Figure 8 is an enlarged cross-section view of the device 100 in the opened position where the cross-section is in the same plane shown in Figure 7. The arrangement of the tension wire 168 is more clearly visible in Figure 8. The tension wire 168 may be arranged, as in this embodiment, such that it consistently wraps onto the first and second pulleys 164, 166 at a tangent throughout the full range of the movement between the closed and opened positions. The specific arrangement of the tension wire 168 of this embodiment is described in detail below. However, in other embodiments, the tension wire or other pulley line may be arranged differently. The specific arrangement below is described only as an example.

Figure 8 shows eight points on the tension wire 168 indicated by Q, R, S, T, U, V, W and X. A dotted line is used to designate point V on the tension wire 168 as being hidden from view. The tension wire 168 is anchored to the second pulley 166 at point Q. The tension wire 168 is anchored to the first pulley 164 by the first screw 170 in the wire hole 190 at point U. The specific arrangement of the tension wire 168 is provided as an example, and a wire, belt or other flexible element coupling pulleys may be arranged differently than described herein.

In the opened position, the tension wire 168 exits the wire hole 190 in the upward direction at point T and in the downward direction at point V. As shown in Figure 7, by offsetting the wire hole 190 in the first pulley 164, the angle that the tension wire 168 bends when emerging from the wire hole 190 (at points T and V) is lowered (i.e. less than 90 degrees) thereby reducing the crimping effect on the tension wire 168. In this embodiment, the tension wire 168 is sized such that high tension is maintained throughout the tension wire 168 throughout the movement of the device 100. The specific means by which the tension wire 168 is anchored to the first pulley 164 and the second pulley 166 is not limited to the first screw 170 and the anchor screw 175 shown in Figure 8. For example, in other embodiments, the tension wire is anchored by welding or other suitable means.

This arrangement of the tension wire 168, as anchored to the first pulley 164 and the second pulley 166, effectively divides the tension wire 168 into a first half wire section 260 and a second half wire section 262 which are each anchored to the first pulley and the second pulley. In this embodiment, the first wire section 260 and the second wire section 262 have approximately equal lengths, which are fixed. Thus, the first wire section 260 and the second wire section 262 are referred to herein as the first half wire section 260 and the second half wire section 262 respectively. However, in other embodiments, wire sections between anchor points may not be half sections having equal lengths. The first half wire section 260 and the second half wire section 262 effectively act as two links or connections between the first pulley 164 and the second pulley. In some embodiments, separate wires, rather than a single wire, may be used where each separate wire functions similarly to the first half wire section 260 and the second half wire section 262 described herein.

As will be explained below, in this embodiment, the fixed lengths of the first and second half wire sections 260 and 262, and the fixed distance between the first pulley 164 and the second pulley 166 (set by the linkage 112) has the result that rotation of the first pulley 164 (with respect to the base member 108) is transferred to a counter-rotation of the linkage 112, thereby maintaining the path that the top member 102 travels between the opened and closed positions. However, before describing this rotational transfer, further details of the arrangement of the first and second half wire sections 260 and 262, in this embodiment, will be described.

The first half wire section 260 includes: a first wire portion between points Q and R (hereinafter referred to as the first wire portion Q-R); and a second wire portion between points T and S (hereinafter referred to as the second wire portion T-S). The second half wire section 262 includes a third wire portion between points Q and X (hereinafter referred to as the third wire portion Q-X); and a fourth potion between points V and W (hereinafter referred to as the fourth wire portion V-W).

As shown in Figure 8, when the device is in the opened position, the first half wire section 260 (including the first wire portion Q-R and the second wire portion T-S) is partially wrapped around the second pulley 166 and substantially unwrapped from (but in tangential contact with) the first pulley 164. In particular, the first wire portion Q-R wraps partially around the second pulley 166 (in the clockwise direction starting from the point Q), and the second wire portion T-S is substantially unwrapped from the first pulley 164.

Conversely, the second half wire section 262 (including the third wire portion Q-X and the fourth wire portion V-W) is partially wrapped around the first pulley 164 and substantially unwrapped from (but in tangential contact with) the second pulley 166. In particular, the fourth wire portion V-W is wrapped substantially around the entire circumference of first pulley 164 (in the clockwise direction starting from the point V) and the third wire portion Q-X is substantially unwrapped from the second pulley 166.

As will be explained below, this arrangement of the first and second half wire sections 260 and 262 allows each of these sections to wrap onto the first and second pulleys 164, 166 at a tangent throughout the full range of the movement between the closed and opened positions. This arrangement may, therefore, allow the tension wire 168 to unwrap from and wrap around the first and second pulleys 164 and 166 as needed throughout the movement described below. The pulley system of the device 100 is provided as an example of a pulley system that is arranged to maintain tangential contact between the pulleys and the line coupling the pulleys. Pulley systems in other embodiments may be arranged differently. In other embodiments, a line coupling the pulleys may not wrap onto the pulleys at a tangent.

The operation of the elements of the device 100 will now be described with reference to Figures 1 and 7 to 16.

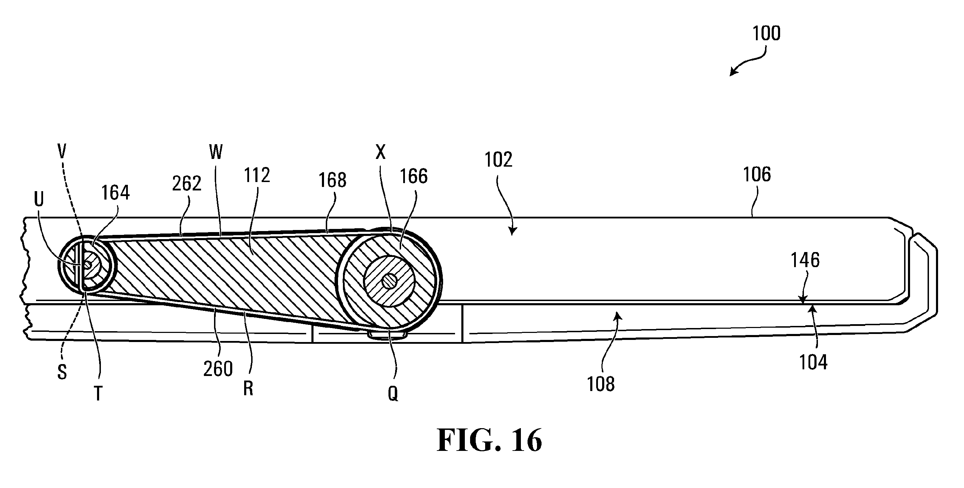

Figures 1 and 7 show the device 100 in the opened position. In order to move to the closed position, which is shown in Figures 15 and 16, the device 100 moves through positions shown in Figures 9 to 14 (which are discussed below).

As shown in Figure 1, in the opened position, the top member 102 overlies the base member 108 and the first top member surface 104 including the touchscreen 136 is accessible. The first top member end 124 is located at the first device end 116 and the second top member end 126 is located at the second device end 118. As will be described below, when the device 100 is moved to the closed position, the top member 102 again overlies the base member 108, but is rotated by approximately 180 degrees such that the touch screen 136 is covered by the base member 108. The movement of the top member 102 with respect to the base member 108 is constrained such that movement of the top member 102 to the closed position follows a pre-defined path.

In order to close the device 100, such that the base member 108 covers the touch screen 136, a user may apply a lifting force to the first top member end 124 (shown in Figure 1), for example, by applying a lifting force to the flange 138, to initiate movement of the top member 102. Lifting on the first top member end 124 of the top member 102 causes the top member 102 to rotate clockwise about a first rotation axis indicated by dotted line 264 (shown in Figure 1) which extends through the first pulley 164. The first pulley 164 rotates together with the top member 102. As can be seen, the perimeter or circumference of the first pulley 164 extends around, or about, the first rotation axis 264.

Turning again to Figure 8, the first half wire section 260 (including the first wire portion Q-R and the second wire portion T-S) actuates the counter-rotation of the linkage 112 for movement of the top member 102 from the opened position to the closed position. In particular, the rotation of the first pulley 164 causes the second wire portion T-S to begin to wrap around the first pulley 164. However, because the first half wire section 260 has a fixed length, and because the linkage 112 maintains a constant distance between the first pulley 164 and the second pulley 166, the first wire portion Q-R must unwrap from the second pulley 166. The fourth wire portion V-W unwraps from the first pulley 164 and the third wire portion Q-X wraps around the second pulley 166. To accommodate above-described pulley action, the linkage 112 rotates counter-clockwise about a second rotation axis indicated by dotted line 266 (shown in Figure 1) which extends through the second pulley 166. Thus, the rotation of the top member 102 actuates the counter-rotation of the linkage 112. As can be seen, the perimeter or circumference of the second pulley 166 extends around, or about, the second rotation axis 266.

The counter rotation of the linkage 112 causes translational movement of the top member 102 with respect to the base member 108. The first rotation axis 264 follows the translational movement of the top member 102 such that the first rotation axis 264 always passes through the first pulley 164.

There is a mathematical relationship between the relative diameters of the first pulley 164 and the second pulley 166, the rotation of the top member 102, and the counter-rotation of the linkage 112. The top member 102 rotates about 180 degrees when moving between the opened and closed positions. The linkage 112, in this embodiment, counter-rotates about two times the angle α shown in Figure 7. The following expression describes the relationship between the angle α, the diameter of the first pulley (represented by D1 in the equation below) and the diameter of the second pulley (represented as D2 in the equation below):

$$D2 = \left( \frac{(2 * \alpha) + 180}{2 * \alpha} \right) D1$$

Therefore, the ratio of the second pulley diameter (D2) and the first pulley Diameter (D1) is close to, but slightly greater than, 2:1. As described above, the angle α in this embodiment is approximately 86 degrees, in which case, the diameter of the second pulley 166 is approximately 2.047 times the diameter of the first pulley 164. Thus, in this embodiment, a diameter of the first pulley 164 being approximately 3.5 mm yields a diameter of the second pulley 166 of approximately 7.16 mm. As described above, the angle α, and therefore the diameter ratio, will be different in other embodiments.

As described above, the ratio of slightly more than 2:1 for the pulley diameters may provide proper rotation of the top member 102 and counter-rotation of the linkage 112. If, for example, the ratio was 1:1, the top member 102 would remain parallel to the base member 108, rising away from and back toward the base member 108, and finally landing in a position offset to the left. By adding 180 degrees to the angle of rotation transcribed by the linkage 112 (i.e. 2 * α) and dividing the result by the angle of rotation to give the pulley diameter ratio, the mechanism adds the desired 180 degree flip to the top member 102 (as opposed to the simple translation that would otherwise be seen with a 1:1 ratio).

Figure 9 is a side view of the device 100 in a first angled position, which is intermediate the closed and opened positions. In particular, the top member 102 has been rotated with respect to the base member 108, and the linkage 112 has counter-rotated as governed by the relative sizes of the first pulley 164 and the second pulley 166 described above. Thus, in the first angled position, the top member 102 is at an angle with respect to the base member 108.

It is possible to hold the mechanism in an intermediate position between the closed and opened positions with either a "soft" or "hard" stop so that it may be held at a given angle, enabling other modes of use or operating configurations. A soft stop may be provided by a biasing force that resists rotation of the top member away from an intermediate position between the closed and opened positions. A hard stop may be provided by an actual physical stop that prevents rotation of the top member from an intermediate position. For example, in this embodiment, a soft stop is provided by an attractive force between the top member magnet 137 (shown in Figure 2) and the linkage magnet 258 (shown in Figure 5).

Figure 10 is an enlarged side view of the device 100 in the first angled position shown in Figure 9. Figure 10 shows the top member magnet 137 and the linkage magnet 258. The top member magnet 137 and the linkage magnet 258 are shown in dotted lines because they are hidden from view by the linkage 112 in Figure 10. As seen in Figure 10, the top member magnet 137 and the linkage magnet 258 are aligned when the device 100 is in the first angled position. The top member magnet 137 and the linkage magnet 258 are arranged to provide an attractive force when aligned. In this embodiment, the top member magnet 137 and the linkage magnet 258 are arranged to provide sufficient attractive force to bias the top member 102 from rotating away from the first angled position absent force applied by a user. Thus, the top member magnet 137 and the linkage magnet 258 act as a "soft stop" to provide a stable position (the first angled position in this embodiment) between the opened and closed positions. Thus, the device 100 is provided with a stable position intermediate the opened and closed positions in which the touch screen 136 on the first top member surface 104 is accessible. A user may apply force to overcome the attractive force of the magnets 137, 258 to move the device 100 away from the first angled position shown in Figure 10.

The top member magnet 137 and the linkage magnet 258 are provided as an example of how a soft stop may be provided. In other embodiments, no stop is provided for establishing a stable intermediate position between closed and opened positions. In other embodiments, a stop to provide one or more stable intermediate positions is provided by any number of suitable methods. For example, the linkage mechanism, in some embodiments, may be adapted to provide increased friction for a portion of the movement between the closed and opened positions to resist the movement of the top member 102. The friction may be sufficient to stabilize the top member 102 in the absence of force applied by the user. In other embodiments, a latch may be used to provide a stop. Various combinations of these methods, as well as any other suitable known methods, may be used. The intermediate stable position is not limited to the particular first angled position shown in Figures 9 and 10. The device may be adapted to provide the intermediate position at any desired angle of the top member. For example, magnets may be used in various locations on the linkage mechanism and the top and/or base members to provide one or more intermediate position at any desired angle. Rather than one intermediate position, multiple positions at various and/or continuous angles may be provided.

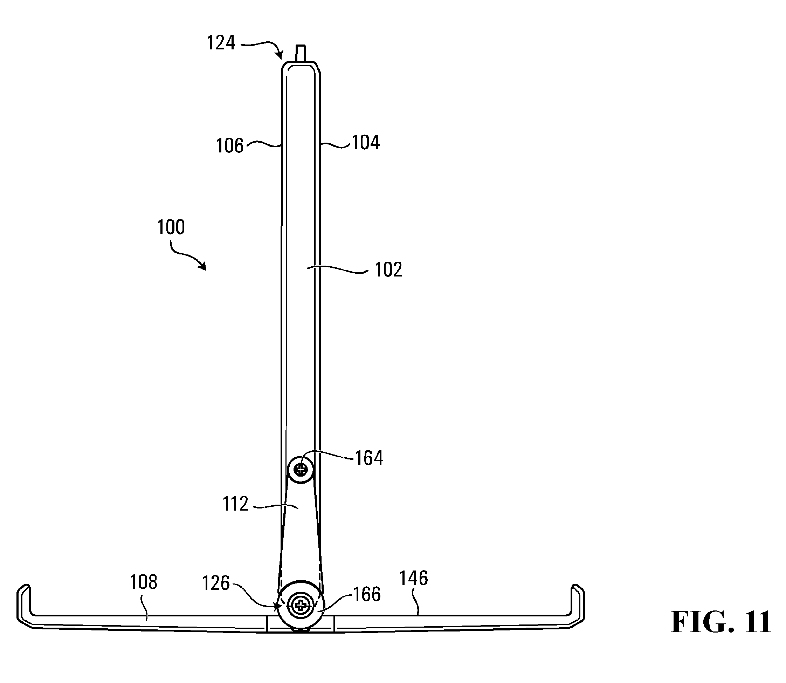

As the device 100 continues to move from the position shown in Figures 9 and 10, it will move to the intermediately opened position shown in Figure 11.

Figure 11 is a side view of the device 100 in an intermediately opened position. The top member 102 is partially shown in dotted lines to indicate where it is hidden by the linkage 112 and the second pulley 166. As shown in Figure 11, when the top member 102 has rotated by approximately 90 degrees, the linkage 112 has counter-rotated such that it is approximately perpendicular to the base member 108. The top member 102 is also perpendicular to the base member 108 with the second top member end 126 nearest to the base member 108. As can also be seen in Figure 11, because the distance between the first pulley 164 (i.e. the first node) and the base member 108 is greater than the distance between the first pulley 164 and the second top member end 126, clearance is provided for the top member 102 as the device 100 is moved between the opened and the closed positions.

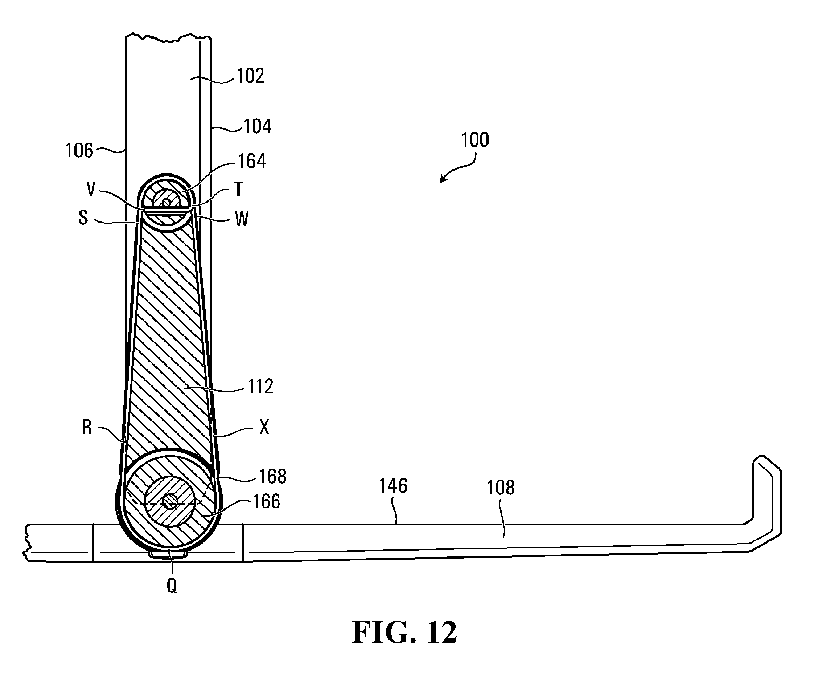

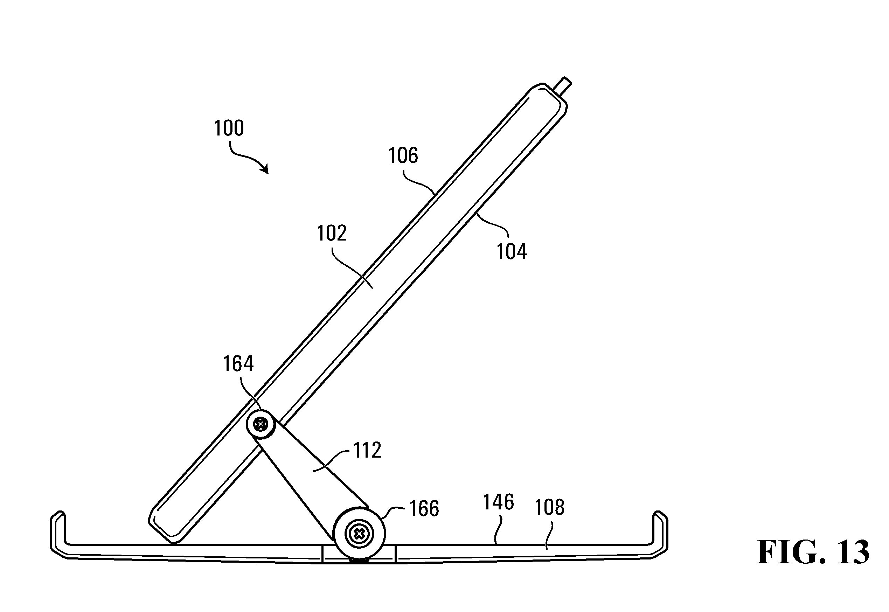

Figure 12 is a partial enlarged cross-section side view of the device 100 in the intermediately opened position of Figure 11. The cross section in Figure 12 is in the same plane shown in Figure 7. However, the device 100 is in the intermediately opened position rather than the opened position. The top member 102 is partially shown in dotted lines to indicate where it is hidden by the linkage 112 and the second pulley 166. The cross-section view of Figure 12 allows the tension wire 168 to be seen. The first half wire section 260 (including the first wire portion Q-R and the second wire portion T-S) is partially wrapped around each of the second pulley 166 and the first pulley 164. The second half wire section 262 (including the third wire portion Q-X and the fourth wire portion V-W) is also partially wrapped around each of the second pulley 166 and the first pulley 164. As the device 100 continues to move from the position shown in Figures 11 and 12, it will move to the second angled position shown in Figure 13.

Figure 13 is a side view of the device 100 in a second angled position, which is intermediate the closed and opened positions. In particular, the top member 102 has been further rotated with respect to the base member 108, and the linkage 112 has counter-rotated by an amount governed by the relative sizes of the first pulley 164 and the second pulley 166 described above. Figure 14 is a reverse side view of the device 100 in the second angled position. Figure 14 shows the lid member 102, the base member 108 and the second linkage mechanism 162. As the device 100 continues to move from the position shown in Figures 13 and 14, it will move to the closed position shown in Figures 15 and 16.

Figure 15 is a perspective view of the device 100 in the closed position. In particular, the top member 102 has been rotated approximately 180 degrees from the opened position so that the second top member end 126 is located at the first device end 116 and the first top member end 124 is located at the second device end 118. As shown in Figure 15, the top member 102 again overlies the base member 108, but the first top member surface 104, including the touchscreen 136 (shown in Figure 1), is covered and protected by the base member. The linkage 112 has also rotated with respect to the base member 108 by two times the angle α, which equals less than (but close to) 180 degrees. Because the second pulley 166 (i.e. the second node) is attached to the base member 108 centrally between the first base member end 157 and the second base member end 158, the position of the linkage mechanism 110 with respect to the base member 108, in the closed position, is a mirror image of the position of the linkage mechanism 110 in the opened position. This relationship, coupled with the 180 degree rotation of the top member 102 results in the top member 102 being in the same lateral position (aligned with the base member 108) as in the opened position, only rotated by 180 degrees.

Figure 16 is a partial enlarged cross-section side view of the device 100 in the closed position. The cross-section in Figure 16 is in the same plane shown in Figure 7. However, the device is in the closed position rather than the opened position. In Figure 16, a portion of each of the first pulley 164 and the second pulley 166 is cut away, parallel with the first pulley outer face 179 (shown in Figure 4) and the second pulley outer face 202 (shown in Figure 3), so that the tension wire 168 can be seen. As seen in Figure 16, in the closed position, the first half wire section 260 (including the first wire portion Q-R and the second wire portion T-S) is partially wrapped around the first pulley 164 and substantially unwrapped from (but is still in tangential contact with) the second pulley 166. In particular, the first wire portion Q-R has substantially unwrapped from the second pulley 166 and the second wire portion T-S has wrapped around the first pulley 164. Conversely, the half second wire section 262 (including the third wire portion Q-X and the fourth wire portion V-W) is partially wrapped around the second pulley 166 and substantially unwrapped from (but in tangential contact with) the first pulley 164. In particular, the third wire portion Q-X has wrapped around the second pulley 166 and the fourth wire portion V-W has substantially unwrapped from the first pulley 164. The points S and V are shown with dotted lines to indicate that they are hidden by overlapping of the tension wire 168.

As described above, the arrangement of the pulley system in this embodiment may ensure that, whenever the device 100 is opened or closed, the top member always transcribes the same pre-defined translational and rotational path when moving between the opened and closed positions. By controlling and constraining the motion of the top member in this manner, a user may be able to more easily open the device because the cover cannot freely move with respect to the top member 102. Rather, less controlled force, dexterity and/or concentration may be required by the user to open and close the device.

The linkage mechanism 110 shown in Figure 1 and described above provides that the top member 102 rotates within the width of the base member 108. Specifically, at no point of the movement of the top member 102 does the top member 102 overhang either the first base member end 142 or the second base member end 143. This may provide the benefit that the device is more comfortable to open in locations where personal space is limited. However, in other embodiments, the lateral movement of the top member is not restricted in this manner and the top member may overhang an end or side of the base member during movement between the opened and closed positions.

In order to move the device 100 from the closed position shown in Figures 15 and 16 back to the opened position shown in Figures 1 and 4, the movements described previously simply need to be reversed. The movement from the closed to the opened position will similarly be constrained such that the top member 102 follows the same pre-defined path, but in reverse. When opening or closing the device, the user may use one hand to hold the base member 108 and another hand to rotate (or "flip") the top member 102. Essentially, the movement of the linkage mechanism 110 will mirror the movement described with reference to Figures 1 and 9 to 16, except that the second half wire section 262 (including the third wire portion Q-X and the fourth wire portion V-W) will actuate the counter-rotation of the linkage for movement of the top member from the closed position to the opened position.

The movement of the device 100 described above has been described from the perspective of a user applying force to the top member 102 to move the top member 102 between the opened and closed positions. In this described movement, the motion constraint mechanism 114 (shown in Figure 1) transfers the rotation of the top member 102 to a counter-rotation of the linkage 112. However, the motion constraint mechanism 114 (shown in Figure 1) will also transfer counter-rotation of the linkage 112 to rotation of the top member 102. Thus, force may be applied to the linkage 112, rather than the top member 102, in order to move the device 100 between the opened and closed positions, and the top member 102 may follow the same pre-defined path. In some embodiments, the device may be provided with a mechanism that the user can push or pull to apply force to the linkage for this purpose. Alternatively, the user may apply force directly to the linkage in some embodiments. By way of example, the linkage may have a torsion force applied via a motor, a push button that perhaps drives a rack that, in turn, drives the base gear. One skilled in the art will appreciate that force could be applied by various means. The force applied to the linkage may make the top member of the device open and/or close without being touched directly.

Embodiments are not limited to those in which two nodes are fixed to the top and base members respectively. For example, as described above, a rack and pinion system with two racks attached to the base member may be used. Each rack could be rotatably coupled to the base member at a respective point, and a pinion fixed to the top member could rotate along the racks. This type of arrangement would include three nodes (the two points the racks are attached to the base member being two nodes, and the pinion being a third node) wherein the distance between the node on the top member (the pinion) and the nodes on the base member (the racks) is not constant. As also described herein, other types of systems and arrangements are also possible.

As mentioned above, in systems employing pulleys, the diameters and/or shapes of the pulleys may vary and are not limited to the particular arrangement shown in Figures 1 to 16. For example, elliptical or oval shaped pulleys may be used such that the perimeters of the pulleys are non-circular. Such non-circular pulleys may allow the pulleys to be smaller in one dimension (for example, the height of the pulleys in the opened and closed positions) than a circular pulley while maintaining the same total perimeter. Also, using non-circular pulleys may allow the rate of rotation of the top member and the linkage to be varied throughout the movement between opened and closed positions. Similar variations may also be applied to non-pulley embodiments (such as gears and sprockets).

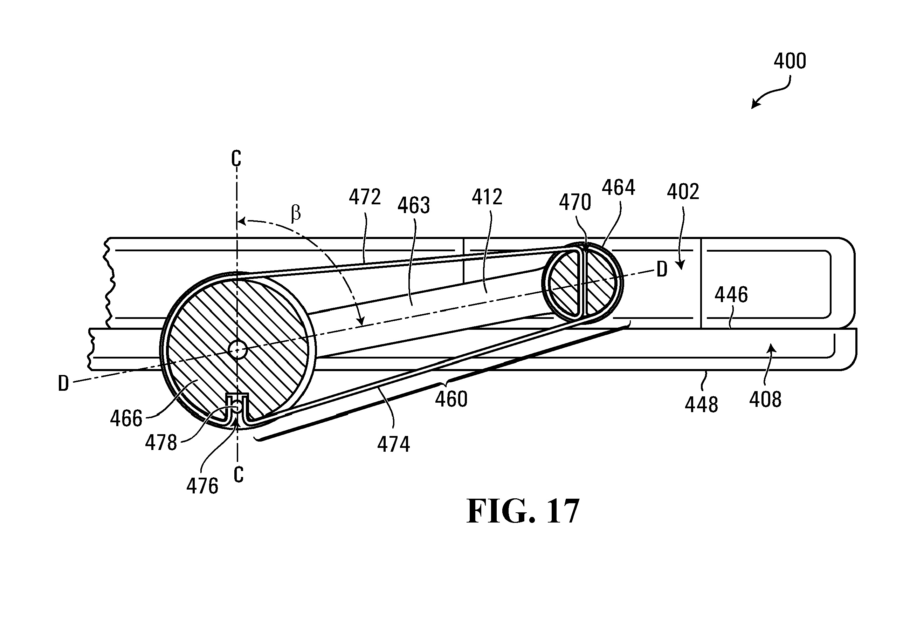

Figure 17 shows an example of another embodiment according to the disclosure in which larger pulleys than those described above are used. The device 400 is shown in an opened position and includes a top member 402 and a base member 408. The device 400 includes a linkage mechanism 460. The top member 402, the base member 408 and the linkage mechanism 460 are all functionally similar to the device 100 (shown in Figures 1 to 10). The linkage mechanism 460 includes a linkage 463, a first pulley 464 and a second pulley 466. The linkage 463 shown in Figure 17 does not include a wire guard, but is a more simple linkage between the first pulley 464 and the second pulley 466.

The movement of the device 400 between opened and closed positions is similar to the movement of the device 100 shown in Figures 1 to 10.

The base member 408 has a first surface 446 and an opposite second surface 448. Figure 17 shows a plane, indicated by the line C-C, which is perpendicular to the first surface 446 and the second surface 448. A line D-D indicates an axis which travels lengthwise along the linkage 412. The angle $\beta$ shown between lines C-C and D-D in Figure 17 indicates half of the angular rotation of the linkage 412 during movement of the device between the closed and opened positions. In this embodiment, the angle $\beta$ is approximately 79 degrees. The first pulley in this embodiment has a diameter of approximately 7mm. Thus, following the mathematical relationship described above with respect to the device 100 shown in Figures 1 to 16 (except using the angle $\beta$ rather than $\alpha$), the diameter of the second pulley 466 is 14.97 mm. Various other pulley sizes, ratios, and angles of rotation may be used in other embodiments.

The device 400 also illustrates an embodiment in which two separate wires couple the top pulley 464 to the base pulley 466. In particular, the first pulley 464 has a first wire hole 470 similar to the wire hole 190 of the first pulley 164 shown in Figure 7. However the first wire hole 470 is not offset in the first pulley 464. Each of a first wire 472 and a second wire 474 are coupled to the first pulley 464 in the first wire hole 470. The second pulley 466 includes a second wire hole 476 and anchor screw 478 for anchoring the first wire 472 and the second wire 474 to the second pulley 466. The arrangement of the first wire 472 and the second wire 474 is similar to the arrangement of the first half wire section 260 and the second half wire section 262 of the tension wire 168 for the device 100 shown in Figures 1 to 16. The ratio of the movement of the device 400 from the opened position to the closed position and vice versa is also similar to the device 100 shown in Figures 1 to 16.

As shown in the figures and described above, embodiments are not limited to particular pulley diameters. However, increasing the size of the first pulley and the second pulley may reduce the stress placed on the line (e.g. tension wire) coupling the pulleys during movement between the closed and opened positions and may thereby reduce the pre-tension required to be maintained in the linkage mechanism (i.e. the tension maintained in the line even when the device is not being moved between the closed and opened positions).

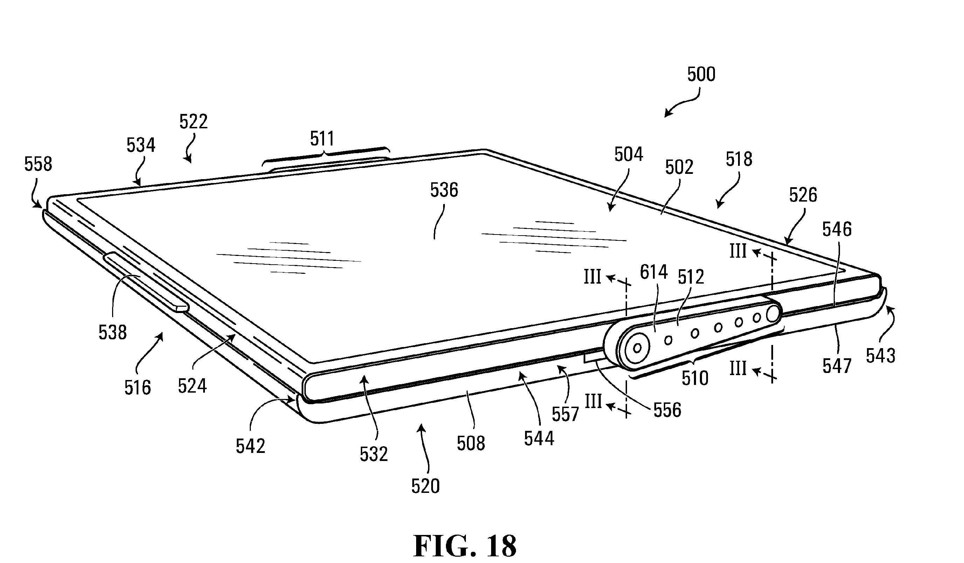

As described above, the linkage mechanism in some embodiments includes a pulley system. In other embodiments, the motion constraint mechanism includes a system that does not include pulleys. Another example embodiment which includes gears rather than pulleys as part of a motion constraint mechanism in a linkage mechanism will now be described with reference to Figures 18 to 24.

Figure 18 is a perspective view of a device 500 according to another embodiment of the disclosure in which a gear system is employed. The device 500 described herein is provided as another example embodiment. The device 500 is shown in a first position in Figure 18. The device 500 can be moved to a second position, as will be discussed below. The first and second positions of the device 500 may be referred to as opened and closed positions.

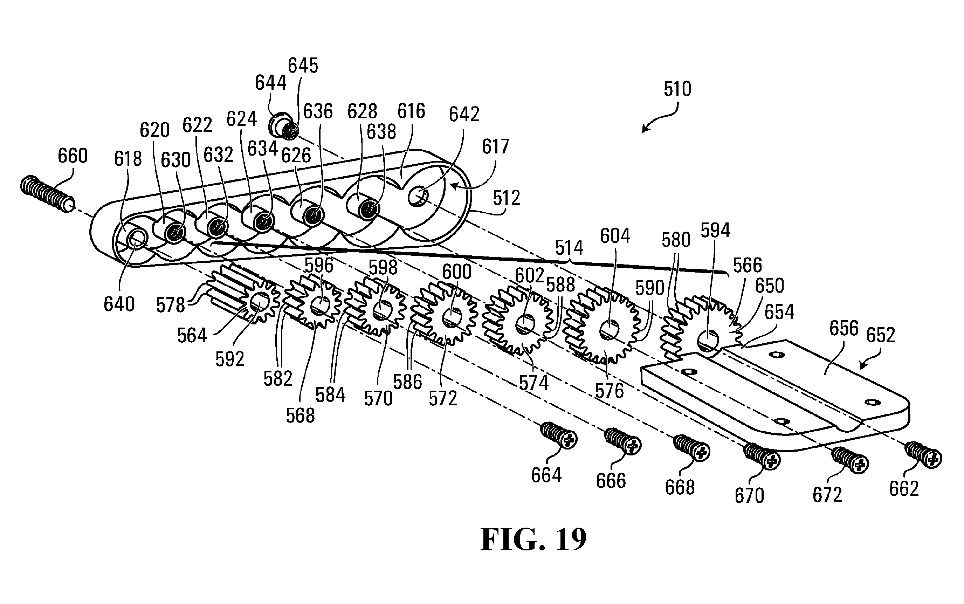

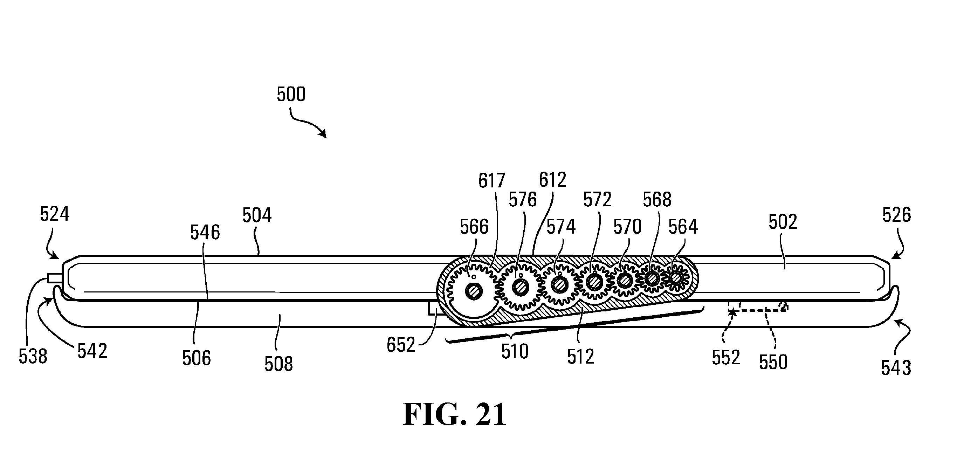

The device 500 includes a top member 502 having a first top member surface 504 and a second top member surface 506 (shown in Figures 21 to 24) opposite to the first top member surface 504. The device 500 also includes a base member 508. The device 500 further includes at least one linkage mechanism 510, 511 coupling the top member 502 and the base member 508 such that device 500 may be moved between the opened position and the closed positions. The linkage mechanism 510 includes a gear housing 512 which acts as a linkage intermediate the top member 502 and the base member 508. In this embodiment, the linkage has a fixed length, although, as described above, linkages in other embodiments may not have a fixed length. The at least one linkage mechanism 510, 511 also includes a motion constraint mechanism 514 (shown in Figure 19) that constrains movement of the top member 502 with respect to the base member 508 between the opened and closed positions to a pre-defined rotational and translational path, the rotational and translational path being defined by rotation of the top member 502 with respect to the base member 508 and counter-rotation of the linkage 512 with respect to the base member 508. When the device 500 is in the opened position, the top member 502 overlies the base member 508 with the second top member surface 506 facing toward the base member 508 (i.e. the second top member surface 506 is covered by the base member 508). The first top member surface 504 is accessible and faces away from the base member 508. When the device 500 is in the closed position, the top member 502 overlies the base member 508 with the first top member surface 504 facing toward the base member 508 (i.e. the first top member surface 504 is covered by the base member 508). The second top member surface 506 is accessible and faces away from the base member 508.

The at least one linkage mechanism in this embodiment 510 includes a first linkage mechanism 510 and a second mirrored linkage mechanism 511. The at least one linkage mechanism 510, 511 described herein provides a controlled movement of the device wherein the movement of the top member 502 is constrained such that the top member 502 transcribes the same translational and rotational path throughout the entire movement between the opened position and the closed position. The motion constraint mechanism 514 (shown in Figure 19) transfers the rotation of the top member 502 to the counter-rotation of the linkage 512. The motion constraint mechanism 514 also transfers the counter-rotation of the linkage 512 to the rotation of the top member 502. Thus, the motion control mechanism couples the rotation of the top member 502 with the counter-rotation of the linkage 512.

The result of this rotational coupling is that, for any point of the rotation of the top member 502 with respect to the base member, the translational position of the top member 502 is defined and vice versa. Thus, the top member 502 follows a unique, pre-determined or pre-defined rotational and translational path for movement between the closed and opened positions. This pre-defined path is described in more detail below. In this embodiment, the pre-defined path of the top member includes approximately 180 degrees of rotation with respect to the base member with the top member being in approximately the same lateral position in both the opened position and the closed positions. The path may vary in other embodiments. For example, the rotation of the top member, and/or its relative positioning in the opened and closed positions may be different.

The device 500 has a first device end 516, an opposite second device end 518, a first device side 520 and an opposite second device side 522. The distance from the first device end 516 to the second device end 518 is referred to herein as a length of the device. The distance from the first device side 520 to the second device side 522 is referred to herein as a width of the device.

The direction extending from the first device end 516 to the second device end 518 is referred to herein as the forward direction and the opposite direction is referred to herein as the backward direction. The direction extending perpendicularly away from the base member 508 toward the top member 502 is referred to herein as the upward direction and the opposite direction is referred to herein as the downward direction. An orientation in the upward and/or downward direction may be referred to as vertical. These reference directions are for ease of description and do not restrict the orientation of the elements of the device 500 including the top member 502 and the base member 508 during use.

The top member 502 and the base member 508 of the device 500 shown in Figure 18 are similar in form and function to the top member 102 and base member 108 of the device 100 shown in Figure 1. In this embodiment, the first top member surface 504 includes a touchscreen 536 that covers most of the first top member surface 504.

In some embodiments, the top member includes a means to provide an accessible location for a finger to grip the top member 502 in order to move the device from either the opened position or the closed position. For example, the embodiment shown in Figure 18 includes a flange protrusion 538 that extends from the first top member end 524.

The base member 508 in this embodiment is a protective cover. The base member 508 includes a substantially flat cover 544 that is shaped to cover one of the first top member surface 504 and the second top member surface 506 (shown in Figure 21) of the top member 502 depending on whether the device is in the opened position or the closed position. The cover 544 has a first cover face 546 (shown in Figures 21 to 24) and an opposite second cover face (not shown). The base member has a first base member end 542 and an opposite second base member end 543. The first base member end 542 and the second base member end 543 in this embodiment are curved upward slightly from the flat cover 544 and only partially cover the first top member end 524 and the second top member end 526. As described above, other embodiments provide different shapes for the top and base members.

The base member 508 has a first base member side 557 and a second base member side 558 opposite to the first base member side 557. The base member 508, in this embodiment, includes a generally rectangular shaped pulley attachment recess 556 in the first cover face 546 at the first base member side 557. The pulley attachment recess 556 is located centrally along first base member side 557 and has a depth less than the thickness of the base member 557. A corresponding and mirrored recess (not shown) is at the second base member side 558.

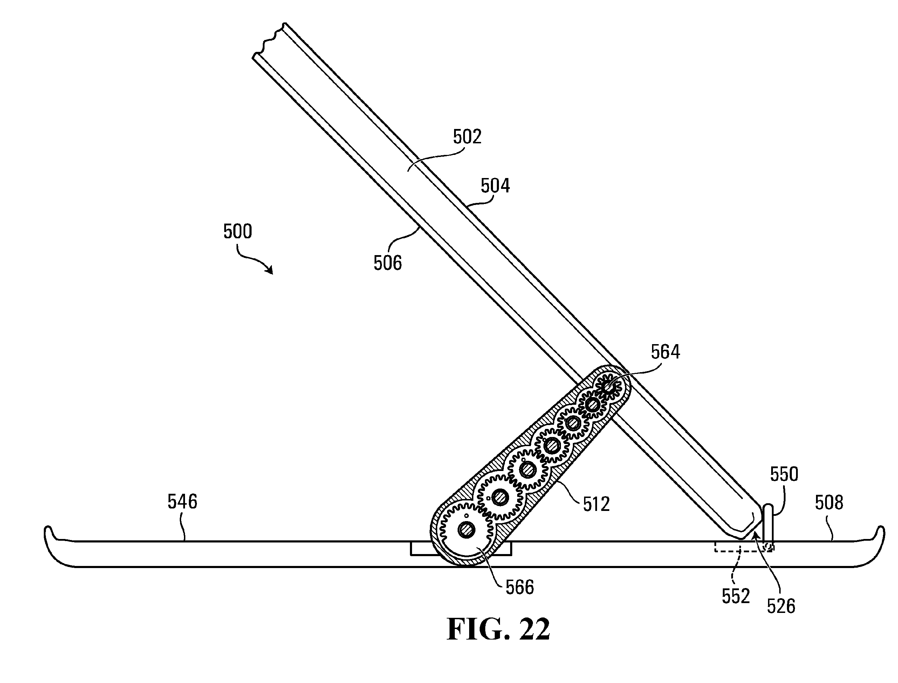

As described above, in some embodiments, a "soft stop" or a "hard stop" may be implemented in order to provide one or more stable positions between the opened and closed positions. In this embodiment, the base member 508 includes a peg 550, that is retractable or reclinable, and a peg recess 552 (both shown in Figures 21 to 24). The peg recess 552 is shown in dotted lines to indicate that it is hidden from view by the first base member side 557. The peg 550 is similarly shown in dotted lines in Figures 21, 23 and 24 for the same reason. In this embodiment, the peg 550 is located approximately where the second top member end 526 will be positioned over the base member 508 when the device is in the first angled position shown in Figure 22. The peg 550 is centrally located between the first base member side 557 and the second base member side 558. The peg 550 is adapted to be rotated between a reclined position, wherein the peg 550 lies flat in the peg recess 552, and an upright position where the peg 550 is upright and protrudes substantially vertically out of the peg recess 552. For example, the peg 550 in this embodiment is hingeably attached in the peg recess 552 to allow the rotation between the reclined position and the upright position. The peg 550 rotates toward the second base member end 543 when moving to the upright position. The peg 550 may be located anywhere between the base member side 557 and the second base member side 558 so long as the peg 550, when upright, blocks the path of the second top member end 526 in at least one direction so that the top member 502 can remain in a desired intermediate position. In this embodiment, the peg 550 is positioned to prevent movement of the top member 502 away from the first angled position shown in Figure 22. Specifically, the peg 550 prevents the top member 502 from falling back to the opened position shown in Figure 21.

In the embodiment shown in Figure 18, the first top member end 524 and the second top member end 526 are rounded, although other configurations are possible.

The first linkage mechanism 510 shown in Figure 18 is located on the first device side 520. The second linkage mechanism 511 mirrors the linkage mechanism 510 and is located on the second device side 522 opposite to the linkage mechanism 510. The first linkage mechanism 510 is essentially the same as the second linkage mechanism 511 in form and function with the exception that the first linkage mechanism 510 and the second linkage mechanism 511 are mirrored with respect to each other. For simplicity, only the first linkage mechanism 510 will be described in detail herein. In other embodiments, only one of the first linkage mechanism 510 and the second linkage mechanism 511 described herein is present. The mirrored pair of linkage mechanisms including the linkage mechanism 510 and the second linkage mechanism 511 are shown by way of example, and other embodiments employ different mechanisms. In other embodiments, one of the linkage mechanisms may be a simple link rotatably coupled to the top and base members or any other suitable linkage mechanism to allow the necessary movement of the top member.

The first linkage mechanism 510 will now be explained in more detail with respect to Figures 19 to 21. Figure 19 is an exploded reverse perspective view of the first linkage mechanism 510. The first linkage mechanism 510 includes the gear housing 512 and the rotational constraint mechanism 514. Figure 19 also shows a top screw 660, a base screw 662, and first, second, third fourth and fifth intermediate screws 664, 666, 668, 670, 672.

In some embodiments, the rotational constraint mechanism includes a gear system. For example, the rotational constraint mechanism 514, in this embodiment, includes a first or top gear 564, a second or base gear 566, and at least one gear meshed intermediate the top gear 564 and the base gear 566. More specifically, in this embodiment, the at least one gear includes a first intermediate gear 568, a second intermediate gear 570, a third intermediate gear 572, a fourth intermediate gear 574 and a fifth intermediate gear 576. As will be described below, the top gear 564 forms a first node fixed to the top member 502 (shown in Figure 18), the base gear 566 forms a second node fixed to the base member 508 (shown in Figure 18), and the first, second, third, fourth and fifth intermediate gears 568, 570, 572, 574 and 576 form a rotation transfer mechanism connecting to the first node and the second node that is adapted to transfer rotation between the first node and the second node, similar to the device 100 described with reference to Figures 1 to 16.

Several details of the linkage mechanism 510 described above relating to how the elements of the linkage mechanism 510 are connected and assembled are described below. Such details are provided as examples only. For example, details of the gear housing 512 and the top gear 564, the base gear 566, and the first, second, third, fourth and fifth intermediate gears 568, 570, 572, 574 and 576 are specific to this implementation. The size, teeth, and methods of attaching and meshing gears intermediate the top and base members may vary.

The top gear 564 has top gear teeth 578. The base gear 566 has base gear teeth 580. The first, second, third, fourth and fifth intermediate gears 568, 570, 572, 574 and 576 have first, second, third, fourth and fifth intermediate gear teeth 582, 584, 586, 588 and 590 respectively. In this embodiment, the base gear teeth 580 do not extend around the entire circumference of the base gear 566 (shown in Figure 21).

The top gear 564 has a top gear pivot hole 592. The base gear 566 has a base gear pivot hole 594. The first, second, third, fourth and fifth intermediate gears 568, 570, 572, 574 and 576 have first, second, third, fourth and fifth intermediate gear pivot holes 596, 598, 600, 602 and 604 respectively. Each of the pivot holes 592, 594, 596, 598, 600, 602 and 604 is centrally located in the respective gear 564, 566, 568, 570, 572, 574 and 576.

In this embodiment, the diameter of the base gear 566 is slightly more than two times the diameter of the top gear 564. The mathematical relationship between the diameters of the top gear 564 and the base gear 566 is similar to the device 100 described with reference to Figures 1 to 16.

The gear housing 512, in this embodiment, does not flex or bend. The gear housing 512 has an outer side 614 (shown in Figure 18) and an inner side 616. The gear housing 512 includes a housing recess 617 in the inner side 616 that is shaped to receive and allow rotation of each of the top gear 564, the base gear 566 and the first, second, third, fourth and fifth intermediate gears 568, 570, 572, 574, 576 within the gear housing 512 with the gears 564, 566, 568, 570, 572, 574 and 576 being meshed together. The gear housing 512 further includes a top gear pin 618, a first intermediate gear pin 620, a second intermediate gear pin 622, a third intermediate gear pin 624, a fourth intermediate gear pin 626 and a fifth intermediate gear pin 628 within the housing recess 617. The top gear pin 618 and the first, second, third, fourth and fifth intermediate gear pins 620, 622, 624, 626, 628 are shaped to be rotatably received in the corresponding top gear pivot hole 592 and first, second, third, fourth and fifth intermediate gear pivot holes 596, 598, 600, 602 and 604 respectively.

In this particular embodiment, the first, second, third, fourth and fifth intermediate gear pins 620, 622, 624, 626, 628 have first, second, third, fourth and fifth threaded holes 630, 632, 634, 636 and 638 respectively along their length to receive the first, second, third fourth and fifth intermediate screws 664, 666, 668, 670, 672 respectively from the inner side 616 of the gear housing 512. The top gear pin 618 has a non-threaded hole 640 shaped to receive the top screw 660 from the outer side 614 (shown in Figure 18) of the gear housing 512. Finally, the gear housing 512 includes a housing hole 642 located in the housing recess 617. A stepped bush 644 is also shown in Figure 19. The housing hole 642 and the base gear pivot hole 594 are adapted to receive the stepped bush 644 (also shown in Figure 19) from the outer side 614 of the housing. The stepped bush 644 includes a bush threaded hole 645 adapted to receive the base screw 662.

In this embodiment, each of the base gear 566 and the first, second, third, fourth and fifth intermediate gears 568, 570, 572, 574, 576 have a thickness that is less than the depth of the housing recess 617. However, the top gear 564 has a thickness that is greater than the depth of the housing recess 617.

The base gear 564 has an inner base gear face 650 and an opposite outer base gear face (not shown).

The base gear 566 may be fixed to the base member 508 (shown in Figure 18) in various ways. In this embodiment, the first linkage mechanism 510 includes a pulley attachment member 652. The base gear 566 is parallel to the first device side 520 (shown in Figure 18). The base gear 566 is formed integral to and extends upwardly from the pulley attachment member 652. In particular, the pulley attachment member 652 includes a narrow section 654, which extends away from the inner base gear face 650. The narrow section 654 is shaped to provide clearance for the gear housing 512. The pulley attachment member 652 also includes wide section 656 extending from the narrow section in a direction away from the base gear 566. The wide section 656 is generally rectangular shaped and is shaped to fit in the pulley attachment recess 556 (shown in Figure 18).

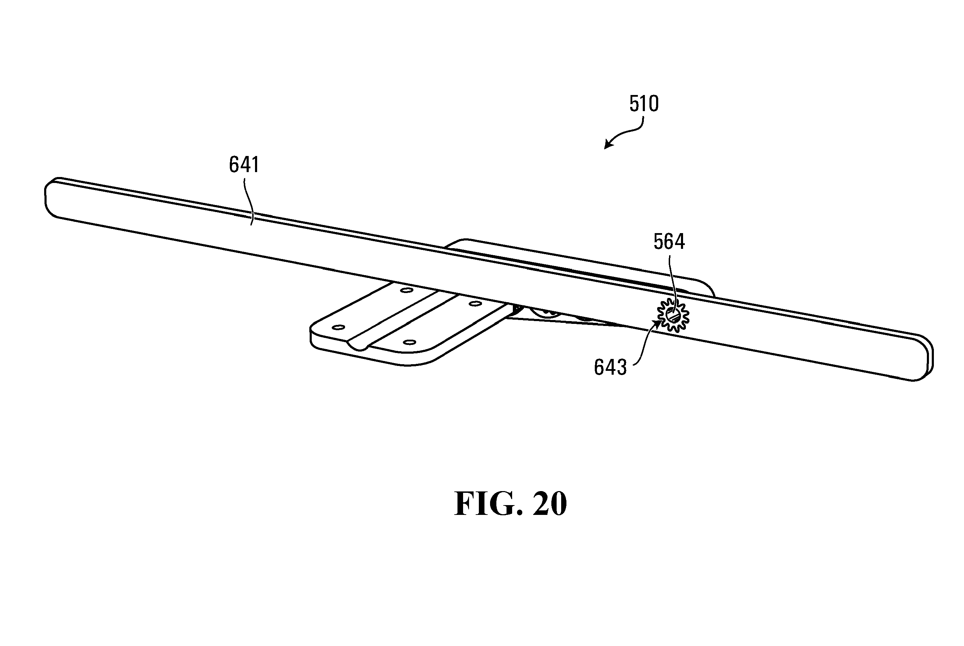

Figure 20 is a perspective view of the first linkage mechanism 510 shown in Figure 17 and further including top strip 641. The top strip 641 is an elongated strip shaped to fit on the first top member side 532 (shown in Figure 18). The top strip 641 includes a gear shaped hole 643 that is shaped to fixedly receive the top gear 564, such that the top gear 564 cannot rotate in the gear shaped hole 643. The top strip 641 and the first top member side 532 are adapted so that the top strip 641 is fixedly attachable to the first top member side 532. For example, the top strip 641 may be attached to the first top member side 532 by means of screws, adhesive, welding, latches, or any other suitable means. The top member 502 (shown in Figure 18) has a threaded hole (not shown) for receiving the top screw 660 (shown in Figure 19) through the gear shaped hole 643 when the top strip 641 is attached to the top member 502.

The assembly of the device 500 will now be explained with respect to Figures 19 to 21. Figure 21 is a cross-section side view of the device 500 in the opened position, wherein the cross-section is taken along the lines III-III in Figure 18. The cross-section is taken so that the top gear 564, the base gear 566 and the first, second, third, fourth and fifth intermediate gears 568, 570, 572, 574, 576 are visible.

The top gear 564 is received in the housing recess 617 such that the top gear pin 618 (shown in Figure 19) is received in the top gear pivot hole 592 (shown in Figure 19). The first, second, third, fourth and fifth intermediate gears 568, 570, 572, 574, 576 are likewise received in the housing recess 617 on the respective first, second, third, fourth and fifth intermediate gear pins 620, 622, 624, 626, 628 (shown in Figure 19) such that the first, second, third, fourth and fifth intermediate gears 568, 570, 572, 574, 576 are meshed in series from the top gear 564. The first, second, third, fourth and fifth intermediate gears 568, 570, 572, 574, 576 are held axially in place in the housing recess 617 by the first, second, third fourth and fifth intermediate screws 664, 666, 668, 670, 672 (shown in Figure 19), which are tightened in the first, second, third, fourth and fifth threaded holes 630, 632, 634, 636 and 638 (shown in Figure 19). The top gear 564 is also received in the gear shaped hole 643 of the strip 641 (shown in Figure 20), which is in turn attached to the top member 502 (shown in Figure 21) by any suitable means. The top screw 660 is received in the top hole 640 (shown in Figure 19) of the gear housing (both shown in Figure 19), through the gear shaped hole 643 of the strip 641 (shown in Figure 20) and into a threaded hole (not shown) in the top member 502 to axially hold the top gear 564 next to the top member 502 and on the top gear pin 618. The gear shaped hole 643 rotationally fixes the top gear 564 to the top member 502.

The base gear 566 is rotatably coupled to the gear housing 512 by means of the base screw 662 and the stepped bush 644 (both shown in Figure 19). The base gear 566 is meshed to the fifth intermediate gear 576. The pulley attachment member 652 is fixedly attached to the base member 508 (shown in Figure 21) in the pulley attachment recess 556 (shown in Figure 18) by any means suitable. For the example, the pulley attachment member 652 may be screwed to the base member 508.

The top gear 564, the base gear 566 and the first, second, third, fourth and fifth intermediate gears 568, 570, 572, 574, 576 are rotatable within the gear housing 512 and are also rotatable with respect to each other. However, the gears 564, 566, 568, 570, 572, 574, 576 do not move translationally with respect to the gear housing. Thus, the top gear 564 forms the first node that is fixedly attached to the first top member side 532 (shown in Figure 18), the gear housing 512 being rotatably coupled to the top member 502 at the first node. The base gear 566 forms the second node that is fixedly attached to the first base member side 557, the gear housing 512 being rotatably coupled to the base member 508 at the second node. The gear system including the top gear 564, the base gear 566 and the first, second, third, fourth and fifth intermediate gears 568, 570, 572, 574, 576, forms the rotation transfer mechanism connecting to the first node and the second node and is adapted to transfer rotation therebetween, to thereby transfer the rotation of the top member 502 to the counter-rotation of the linkage 512 and vice versa.

The relative sizes of the first, second, third, fourth and fifth intermediate gears 568, 570, 572, 574, 576 with respect to the top gear 564 and the base gear 566 may vary. The sizes shown in Figures 18 to 23 are provided by way of example only. For example, the intermediate gears may be larger or smaller than one or both of the top gear 564 and the base gear 566.

The operation of the device 500 will now be described with respect to figures 21 to 24. The movement of the top member 502, the base member 508 and the gear housing 512 with respect to each other as the device is opened or closed is similar to the device 100 described with respect to Figures 1 to 16. Specifically, the rotation of the top gear 564 is coupled to the rotation of the base gear 566 such that a rotation of the top member 502 with respect to the base member 508 actuates a counter-rotation of the gear housing 512 with respect to the base member 508. The relative rotation of the top member 502 and the gear housing 512 is defined by the ratio of the diameter of the base gear 566 to the diameter of the first gear 564. Therefore, this ratio may be slightly more than 2:1in order to provide a top member 502 that rotates approximately 180 degrees when the device 500 is opened or closed.

Turning to Figure 21, the opened position of the device 500 shown in Figure 21 is similar to the opened position of the device 100 shown in Figure 1. As will be described, the movement of the top member 502 with respect to the base member 508 is constrained such that movement to the closed position follows the pre-defined rotational and translational path.

In order to close the device, such that the base member 508 covers the touch screen 536 (shown in Figure 18), a user may apply a lifting force to the first top member end 524 (e.g. by lifting the flange 538) to initiate movement of the top member 502. Applying a lifting force to the first top member end 524 of the top member 502 causes the top member 502 to rotate clockwise (with respect to the orientation of the device 500 shown in Figure 21). The rotation of the top gear 564 causes a counter-rotation in the first intermediate gear 568. The counter-rotation of the first intermediate gear causes a rotation of the second intermediate gear 570 and so on until the fifth intermediate gear 576 is rotated in the counter-clockwise direction. From the perspective of the base gear 566 staying still, as shown in the figures, the rotation of the fifth intermediate gear 576 causes it to travel counter-clockwise around the circumference of the base gear 566. Therefore, the gear housing 512 also rotates counter-clockwise about the base gear 566, which is a counter-rotation with respect to the rotation of the top member 502. The device 500, thereby moves towards the position shown in Figure 22.

The linkage mechanism 510 provides that the top member 502 rotates within the length of the base member 508. Specifically, the top member 502, with exception of the flange 538, does not overhang either the first base member end 542 or the second base member end 543 during any part of the movement between the opened and closed positions.

Figure 22 is a partial cross-section side view of the device 500 in a first angled position. Figure 22 shows the same cross-section plane as Figure 21, although the device 500 is in a different position. The peg 550 is shown in the upright position in Figure 22. The peg 550 may act as a hard stop to prevent the top member 502 from moving back to the opened position shown in Figure 21. Thus, the device 500 is provided with a stable position intermediate the opened and closed positions in which the touch screen 536 (shown in Figure 18) on the first top member surface 504 is accessible. As described above, a hard or a soft stop may be implemented in various ways, and embodiments are not limited to any particular type of soft or hard stop. In other embodiments, no hard or soft stop is provided. The peg 550 may be left in or returned to the reclined position in order to remove the physical stop holding the top member 502.

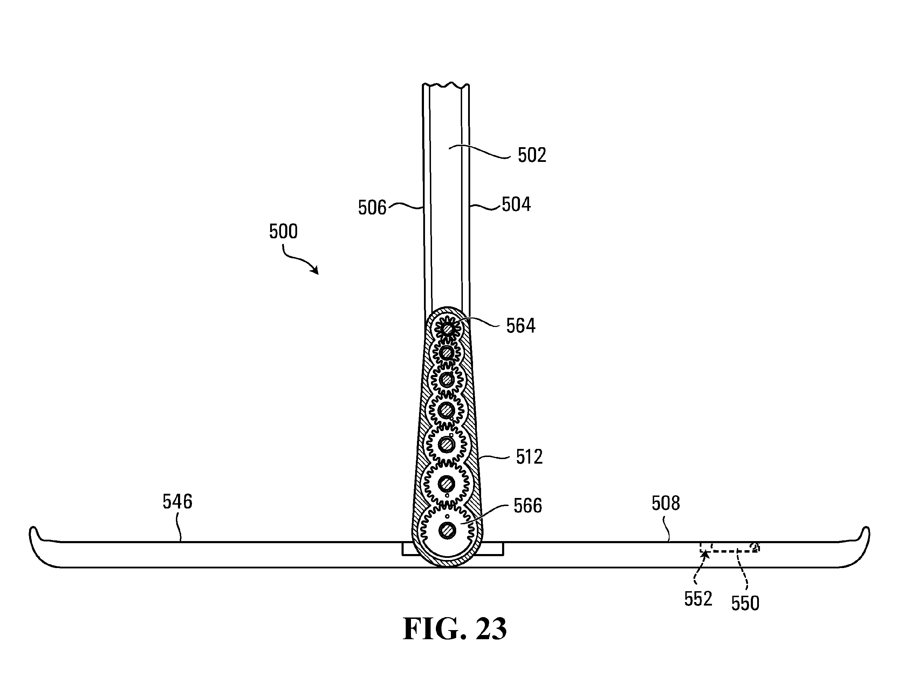

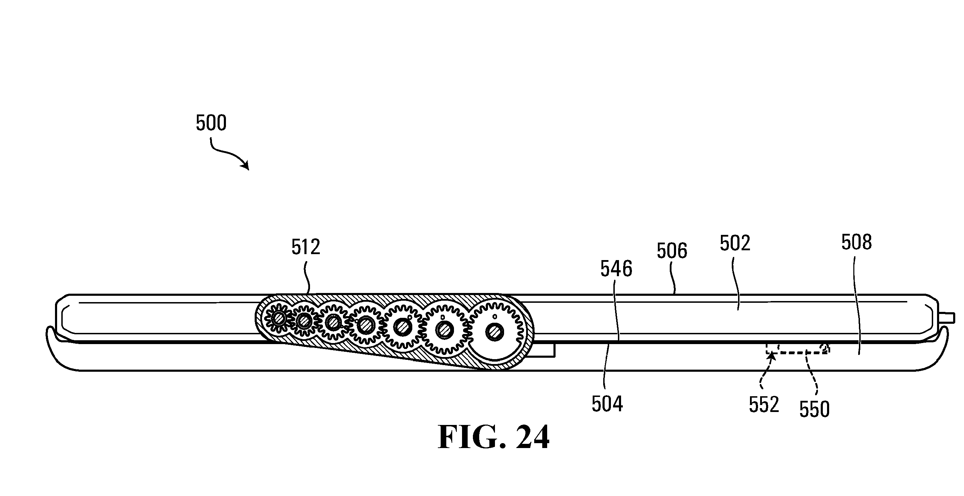

Figure 23 is a partial cross-section side view of the device 500 in an intermediately opened position. Figure 23 shows the same cross-section plane as Figure 22, although the device 500 is in a different position. As shown in Figure 23, when the top member 502 has rotated by approximately 90 degrees, the gear housing 512 has counter-rotated such that it is approximately perpendicular (lengthwise) to the base member 508. Although not shown in Figure 23, by positioning the top gear 564 less than one quarter of the length of the top member 502 away from the second top member end 526 (shown in Figure 18), clearance is provided for the top member 502 as the device is moved between the opened and the closed positions. As the device 500 continues to move from the position shown in Figure 23, it will move to the closed position shown in Figure 24.

Figure 24 is a cross-section side view of the device 500 in the closed position. Figure 24 shows the same cross-section plane as Figure 23, although the device 500 is in a different position. In particular, the top member 502 has been rotated approximately 180 degrees from the opened position shown in Figure 21. The gear housing 512 has been rotated almost, but less than, 180 degrees, similar to the embodiment shown in Figures 1 to 16. As shown in Figure 24, the top member 502 again overlies the base member 508, but the touchscreen 536 (shown in Figure 18) is covered and protected by the base member.

In order to move the device from the closed position shown in Figure 24 back to the opened position shown in Figures 18 and 21, the movements described previously simply need to be reversed. The movement from the closed to the opened position will similarly be constrained.

Similar to the device 100 described with reference to Figures 1 to 16, the device 500 may be moved between the closed and opened positions by applying force directly or indirectly to the gear housing 512 rather than to the top member 502. Movement (counter-rotation) of the gear housing 512 would be transferred to rotation of the top member 502. The possible ways of applying force to the linkage described above with respect to the device 100 shown in Figures 1 to 16 may also be employed for the device 500 shown in Figures 18 to 24.

Other embodiments utilize different numbers and sizes of gears intermediate the top gear 564 and the base gear 566 to transfer rotation therebetween. The number of intermediate gears between the top gear 564 and the base gear 566 determines which direction the intermediate gear meshed with the base gear 566 will travel around the base gear 566. Having an odd number of gears intermediate the top gear 564 and the base gear 566 may provide the proper counter-rotation of the gear housing 512.

Using fewer gears intermediate the top gear 564 and the base gear 566 may reduce the likelihood of gears binding during movement. However, the diameter of gears may be larger if fewer gears are used. Thus, using more gears may reduce a dimensional requirement of the device (e.g. using more gears may allow a slimmer gear housing than an embodiment using fewer gears).

One skilled in the art will also appreciate that constraining movement of the top member to a pre-defined path does not necessarily mean that the relative positions of the top member, the base member and the linkage mechanism are absolutely defined for the entire movement between the opened and closed positions. The pre-defined path, in some embodiments, may have some degree of tolerance. For example, at points in the pre-defined path there might be some possible movement due to "play" in the device. Such play could be caused, for example, by slack in a pulley, backlash in one or more gears and/or other interactions of parts in the device. For example, the top member 502 of the device 500 shown in Figure 18 may be able to rotate a small amount (for example, 1 to 5 degrees) without any rotation being transferred to the gear housing 512. In some embodiments, components that minimize such tolerances and "play" in the device may be used. For example, a gear system may include gears specially designed to reduce backlash. A pulley system (for example the device 100 described with respect to Figures 1 to 16) may maintain sufficient tension in the line coupling the pulleys that backlash and/or "play" is reduced or even substantially eliminated.

As discussed above, a conventional mobile electronic device such as a tablet computing device or a mobile communication device may provide a large surface having a display, touchscreen and/or other interface elements. However, such a device may not provide a keyboard. Other conventional tablet devices or mobile communication devices may include a keyboard, but may not provide a position where the surface including the display, touchscreen and/or other interface elements is angled with respect to the keyboard so that a user may comfortably type while watching the display, touchscreen and/or other interface elements. Still other devices may not include a cover to protect the display, touchscreen and/or other interface elements, wherein the cover may easily and conveniently be moved between a position covering the surface including the display, touchscreen and/or other interface elements and a position wherein the surface is accessible.

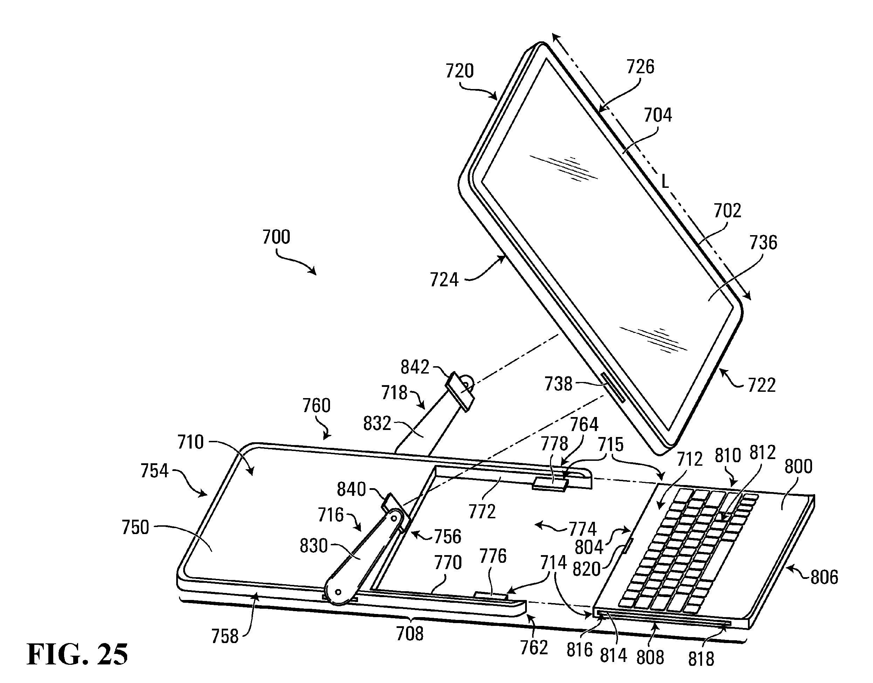

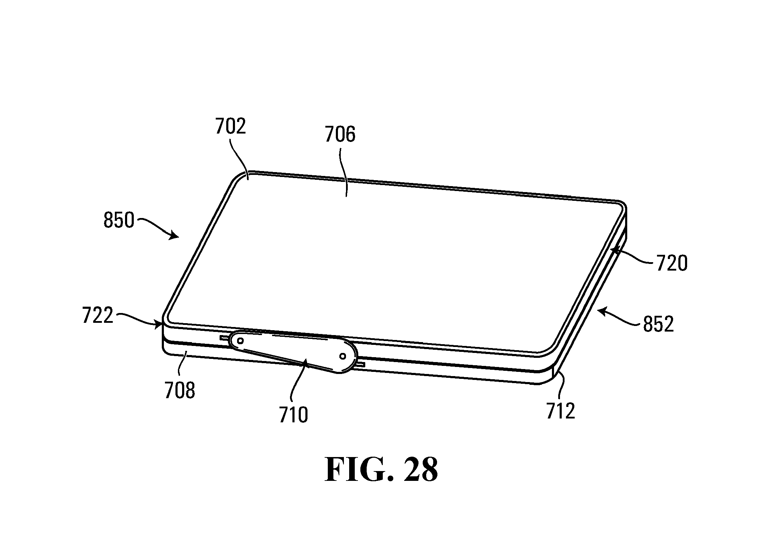

Figure 25 is an exploded perspective view of a device 700 according to another embodiment. The device 700 includes a first or top member 702 having a first top member surface 704 and a second top member surface 706 (shown in Figure 28) opposite to the first top member surface 704. The device 700 also includes a second or base member 708, the base member 708 including a body 710 and an input member 712. The input member comprises an input device as will be discussed below. The input member 712 is coupled to the body 710 by a displacement mechanism that allows the input member 712 to move between an extended position and a retracted position. The lateral displacement mechanism may be a lateral displacement mechanism adapted to allow the input member 712 to be moved laterally between the retracted position and the extended position. In the example embodiment shown in Figure 25, the lateral displacement mechanism includes at least one sliding hinge (i.e. a first sliding hinge 714 and a second sliding hinge 715).

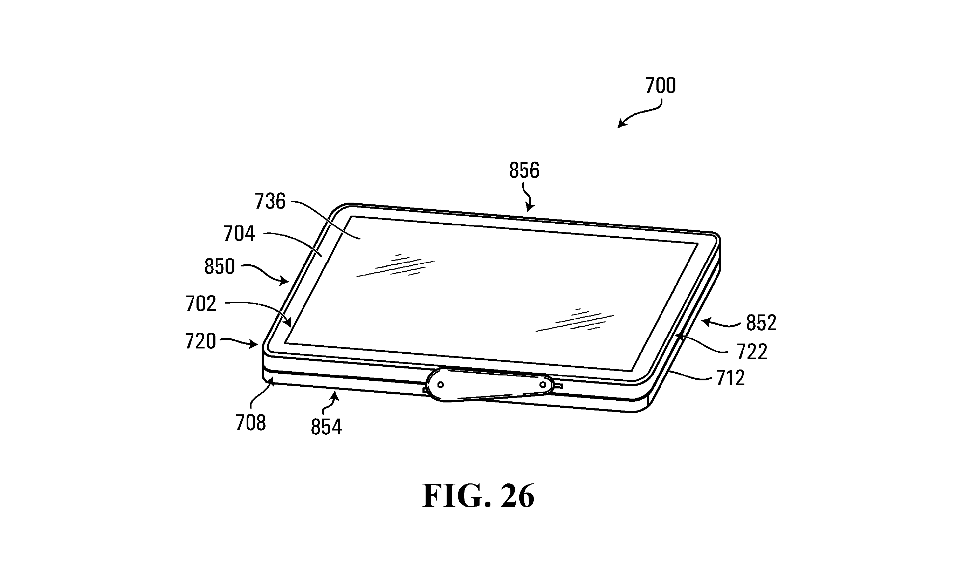

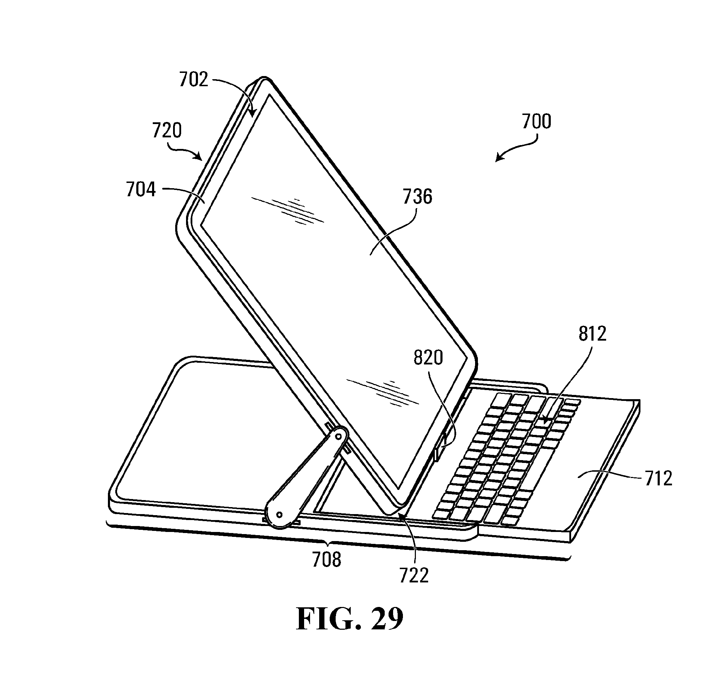

The device 700 further includes at least one linkage mechanism 716, 718 interconnecting the top member 702 and the base member 708 such that the top member 702 and the base member 708 can be moved relative to each other between a first position, a second position, and a third position. The at least one linkage mechanism in this embodiment includes a first linkage mechanism 716 and a second linkage mechanism 718. In the first position, the top member 702 overlies the base member 708 with the second top member surface 706 next to the base member 708, and the first top member surface 704 is accessible (Figure 26). In the second position, the top member 702 overlies the base member 708 with the first top member surface 704 next to the base member 708 and the second top member surface 706 is accessible (Figure 28). In the third position, the top member 702 is angled with respect to the base member 708 and the first top member surface 704 is accessible (Figure 29). In this embodiment, the input device 712 is accessible when the top member 702 and the base member 708 are in the third position and the input member 712 is in the extended position

The first and second positions of the top member 702 and the base member 708 may be referred to as opened and closed positions respectively. The third position of the top member 702 and the base member 708 may be referred to as an angled position.

The direction extending perpendicularly away from the base member 708 toward the top member 702 is referred to herein as the upward direction and the opposite direction is referred to herein as the downward direction. An orientation in the upward and/or downward direction may be referred to as vertical. These directions are used herein for ease of description only and do not limit the orientation of the device during use.

As will be described below, in some embodiments, the displacement mechanism and the at least one linkage mechanism 716, 718 may provide at least three operating configurations for the device 700. In this embodiment, the displacement mechanism and the at least one linkage mechanism 716, 718 provide a first operating configuration, a third operating configuration, and a second operating configuration for the device 700. In the first operating configuration, the top member 702 and the base member 708 are in the opened position and the input member 712 is in the retracted position. In the second operating configuration, the top member 702 and the base member 708 are in the closed position and the input member 712 is in the retracted position. In the third operating configuration, the top member 702 and the base member 708 are in the angled position and the input member 712 is in the extended position. The various positions of the top member 702 and the base member 708, and the operating configurations of the device 700 are explained in more detail below. However, first, the structure and assembly of the top member 702, the base member 708 and the first and second linkage mechanisms 716 and 718 will be described in more detail.

The top member 702 is similar to the top members 102, 402 and 502 described above with reference to Figures 1 to 24. That is, the top member 702 is generally rectangular shaped having a first top member end 720, an opposite second top member end 722, a first top member side 724 and a second opposite top member side 726. As with the other embodiments described herein, the size and shape of the top member are provided as examples only, and the size and shape of the top member may vary in other embodiments.

The top member 702 in this embodiment also includes a touchscreen 736 on the first top member surface 704. However, one or more other interface elements may be present on one or more surfaces of the top member 702. In other embodiments, no touchscreen may be present. Embodiments are not limited to any particular arrangement of interface elements on the top member 702.

As will be discussed below, according to one aspect, the base member (such as the base member 708 shown in Figure 25) and the at least one linkage mechanism (such as the first and second linkage mechanisms 716, 718 shown in Figure 25) are attachable to the top member 702, and may also be detachable from the top member 702. In some embodiments, the top member functions as a mobile electronic device in the absence of the base member and the at least one linkage mechanism.

In the embodiment shown in Figure 25, the top member 702 is provided with a first top member slot 738 and a second top member slot (not shown). The top member 702 has a length L shown in Figure 25. The first top member slot 738 is located on the first top member side 724 less than one quarter of the length L from the second top member end 722. The first top member slot 738 is also located centrally between the first top member surface 704 and the second top member surface 706. The second top member slot mirrors the first top member slot 738 on the second top member side 726. As will be discussed below, the first top member slot 738 and the second top member slot are provided, in this embodiment, for the purpose of allowing the first linkage mechanism 716 and the second linkage mechanism 718 to be attached to and detached from the top member 702. The position, shape and other structural details of the first top member slot 738 and the second top member slot may vary in different embodiments, as will also be discussed below. The first top member slot 738 and the second top member slot are optional and may be omitted in other embodiments.

The base member 708 in this embodiment includes both the base member body 710 and the input member 712. The base member 708 may be a protective cover.

The base member body 710 has an upper base member body surface 750 and a lower base member body surface (not shown) opposite to the upper base member body surface 750. The base member 708 also has a first base member body end 754, an opposite second base member body end 756, a first base member body side 758 and an opposite second base member body side 760. A first base member body extension 762 extends away from the second base member body end 756 at the first base member body side 758. A second base member body extension 764 extends away from the second base member body end 756 at the second base member body side 760. The first base member body extension 762 has a first extension inner surface 770. The second base member body extension 764 has a second extension inner surface 772 parallel to the first extension inner surface 770. Together, the second base member body end 756, the first extension inner surface 770 and the second extension inner surface 772 define a base member body recess 774, which is rectangular. The base member body recess 774 is shaped to receive the input member 712, as will be discussed below. In this embodiment, the base member body 710 has a substantially constant thickness (i.e. the thickness between the upper base member body surface 750 and the lower base member body surface).

In this embodiment, a first base member body tab 776 extends inward from the first extension inner surface 770. A second base member body tab 778 extends inward from the second extension inner surface 772. Each of the first base member body tab 776 and the second base member body tab 778 is a generally rectangular flange extension. As will be discussed below, the first base member body tab 776 and the second base member body tab 778 form part of the first and second sliding hinges 714 and 715 respectively. The first base member body tab 776 and the second base member body tab 778 are provided as an example means for slidably coupling the input member 712 to the base member body 710. However, the displacement mechanism is not limited to lateral displacement mechanisms such as the first and second sliding hinges 714 and 715. The first base member body tab 776 and the second base member body tab 778 are optional and may be omitted. Other examples of how the displacement mechanism may be implemented are discussed below.

The input member 712 of this embodiment is a generally rectangular member having a thickness that is approximately the same as the base member body 710. The input member 712 includes an upper input member surface 800, and a lower input member surface (not shown) opposite to the upper input member surface 800. The input member 712 has a first input member end 804, an opposite second input member end 806, a first input member side 808 and an opposite second input member side 810. The input member 712 is shaped to fit in the base member body recess 774. Specifically, the first input member side 808 and the second input member side 810 are each approximately the same length as the first extension inner surface 770 and the second extension inner surface 772. The distance between the first input member side 808 and the second input member side 810 is approximately the same as, but slightly less than the distance between the first extension inner surface 770 and the second extension inner surface 772.

Embodiments are not limited to the specific base member recess 774 and input member 712 shown in Figure 25. For example, the input member may not be received in a recess in the base member in some embodiments. The input member may be attached to the base member body lower surface in some embodiments. In other embodiments, the base member body includes a slot large enough to receive the input member. The size and shape of the input member may vary. Thus, in embodiments including a base member body recess to receive the input member, the size and shape of the base member body recess may also vary. For example, the input member could be semi-circular or otherwise shaped rather than rectangular. In some embodiments, the base member body recess and the input member may have different shapes with respect to each other.

In some embodiments, the input member may include one or more input devices suitable for receiving input from a user. In this embodiment, the input member 712 includes a keyboard 812 as an input device. However, one or more further input devices may be present on the input member in addition to, or in place of a keyboard. For example, in some embodiments, the input member includes a navigation device, such as a trackball or a touch sensitive pad including a capacitive or resistive sensor, or any other device for receiving input such as a touch-sensitive display. The type and the position of such input devices are not restricted by the keyboard 812, which is described herein simply by way of example.

In this embodiment, the first input member side 808 includes a first input member side groove 814, which is substantially straight and extends along the first input member side 808. The first input member side groove 814 has a first groove end 816 near the end 804 and an opposite second groove end 818 near the second input member end 806, the first input member side groove 814 extending between the first and second groove ends 816 and 818. A similar second input member side groove (not shown) having corresponding ends (not shown) is mirrored in the second input member side 810. The first input member side groove 814 and the second input member side groove are shaped to slidably receive the first base member body tab 776 and the second base member body tab 778 respectively such that the input member 712 may be moved laterally with respect to the base member body 710. The first input member side groove 814 and the second input member side groove (not shown) form a part of the first and second sliding hinges 714 and 715.

As assembled, the first base member body tab 776 and the second base member body tab 778 are received in the first input member side groove 814 and the second input member side groove (not shown) respectively to form the first and second sliding hinges 714 and 715. The input member 712 may slide laterally with respect to the base member body 710. Sliding movement of the input member 712 in a direction away from the second base member body end 756 is limited by the interaction of the first base member body tab 776 with the first groove end 816 and the interaction of the second base member body tab 778 with the corresponding end of the second input member side groove. Sliding movement of the device toward the second base member body end 756 is limited by the interaction of the first input member end 804 and the second base member body end 756. Thus, the input member 712 may move laterally between a retracted position (shown in Figures 26, 27 and 28) and an extended position (shown in Figure 29). In this embodiment, when in the retracted position, the input member 712 is received in the base member body recess 774 and abuts the second body member end 756. In the extended position, the input member 712 is spaced from the second base member end 756. The first base member body tab 776 and the second base member body tab 778 are positioned on the first and second base member body extensions 762,764 such that, when the input member 712 is in the extended position and the top member 702 is in the angled position (as shown in Figure 29), the keyboard 812 is accessible.

Embodiments are not limited to the displacement mechanism being a lateral displacement mechanism such as a sliding hinge. For example, the input member may be rotatably coupled to the base member such that the input member may be rotated or "flipped" between the retracted and the extended position. In other embodiments, the input member may be detachable from the base member to be moved between the retracted and extended positions. One skilled in the art will appreciate that various means may be used to allow an input member to be laterally displaced with respect to the base body member. In addition, the positions between which the input member may be displaced may be different than the example retracted and extended positions described herein with reference to Figures 25 to 29. For example, in the case of a rotating input member, the input member may be angled with respect to the base member body in an extended position. The input member may also extend farther from, or less far from the base member body than the input member 712 shown in Figure 25.

One possible advantage of the input member 712, in this embodiment, sliding with respect to the base member body 710, rather than rotating, is that the keyboard 812 remains facing upward in the retracted position. The keyboard 812 may thus be protected when the top member 702 overlies the base member 708 and the input member 712 is retracted.

The first and second linkage mechanisms 716, 718 coupling the device 700 and the cover member 708, in this specific example embodiment, are similar to the linkage mechanisms 110 and 510 described above with reference to Figures 1 to 24. Specifically, in this embodiment, the first and second linkage mechanisms 716, 718 each include a linkage (not shown) intermediate the device 700 and the cover member 708, the linkage having a fixed length, and a motion constraint mechanism (not shown). However, in this embodiment, elements of the first and second linkage mechanisms 716,718 (including the linkage and the motion constraint mechanism) are hidden by a first linkage housing 830 and a second linkage housing 832 respectively. The linkage and the motion constraint mechanism may be similar to the linkages 112, 412, 512 and the motion constraint mechanisms 114, 514 described above with reference to Figures 1 to 24. Alternatively, the at least one linkage mechanism may not include a motion constraint mechanism or a linkage similar to those described above. For example, a simple linkage having a fixed length that is rotatably coupled between the top and base members may provide an opened position, a closed position, and at least one stable position between the opened and closed positions. In some embodiments, the at least one linkage mechanism includes one or more scissor type hinges intermediate the top and base member.

As described herein, the motion constraint mechanism may include a first node fixedly attached to a side of the top member, the linkage being rotatably coupled to the top member at the first node; a second node fixedly attached to a side of the base member, the linkage being rotatably coupled to the base member at the second node; and a rotation transfer mechanism adapted to rotationally couple the first node and the second node to thereby actuate the counter-rotation of the linkage by the rotation of the top member. In the case of the device 700 shown in Figure 25, the first linkage tab 840 and the second linkage tab 842 may rotatably fix the first node (for each linkage mechanism 716, 718) to the top member 702 because the first linkage tab 840 and the second linkage tab 842 cannot rotate in the first top member slot 738 and the second top member slot (not shown) respectively. However, other methods of rotatably fixing the first node to the top member may be used in other embodiments.

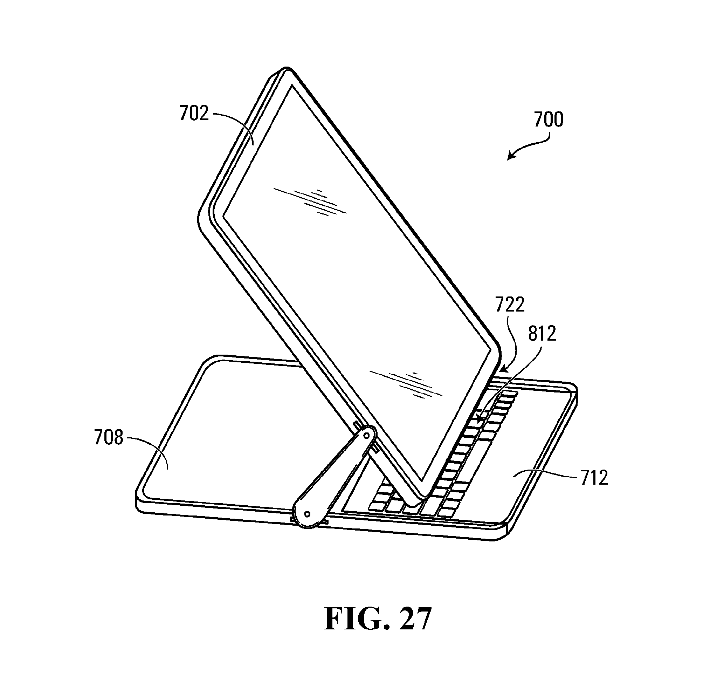

Various possible means for holding the top member and the base member in an angled position between the opened and closed positions, where the user can access interface elements on the top member, are discussed above. For example, magnetic and physical stopping means are described above with reference to Figures 2, 5, 10 and 21 to 24. In this embodiment, the input member 712 includes slidable tab 820 inset in the first input member end 804 for holding the device in the angled position (shown in Figure 27 and discussed below). The slidable tab 820 is adapted to slide between a lowered position (which is shown in Figure 25) and a raised position (which is shown in Figure 29). In the lowered position, the slidable tab 820 is approximately flush with the upper input member surface 800. In the raised position, the slidable tab 820 protrudes above the upper input member surface 800. As will be discussed below, the slidable tab 820 may act as a stop to hold the top member 702 in the angled position shown in Figures 27 and 29. The slidable tab 820 may be adapted to slide between the raised and lowered positions in any suitable manner known in the art. The slidable tab 820 is only provided as one possible example. As described herein, various other means such as magnets, friction in the at least one linkage mechanism, and/or physical interactions may be used to provide a hard or a soft stop in order to provide a stable angled position of the top member between the closed and opened positions of the top and base members.

In this embodiment, the first and second linkage mechanisms 716, 718 are attachable to and detachable from the top member 702. In other embodiments, the at least one linkage mechanism may be fixed to the base member in a non-detachable manner. The base member 708 and the first and second linkage mechanisms 716, 718 may be provided to the user separately from the top member 702. The top member 702 could be used in isolation from the base member 708 and the first and second linkage mechanisms 716, 718. For example, the at least one linkage mechanism may be adapted to "snap on" and "snap off" the top member. One skilled in the art will appreciate that various means may be used to allow the at least one linkage mechanism to be attached to and detached from the top member. For example, a latch, or conventional snap may be used. In the embodiment shown in Figure 25, the first and second linkage mechanisms 716 and 718 include a first linkage tab 840 and a second linkage tab 842 respectively. Each of the first linkage tab 840 and the second linkage tab 842 are generally rectangular tabs. The first linkage tab 840 and the second linkage tab 842 are shaped to be received in the first top member slot 738 and the second top member slot (not shown) respectively. The first linkage mechanism 716 and the second linkage mechanism 718 may bend outward slightly in order to allow the first linkage tab 840 and the second linkage tab 842 to fit around the first top member side 724 and the second top member side 726 respectively to place the first linkage tab 840 and the second linkage tab 842 into the first top member slot 738 and the second top member slot.

The material forming the elements of the first and second linkage mechanisms 716, 718, such as the first linkage housing 830 and the second linkage housing 832 may have sufficient stiffness and/or resilience to provide a biasing force that resists the first and second linkage mechanisms 716, 718 from bending. This biasing force may be sufficient to axially fix the first linkage mechanism 716 and the second linkage mechanism 718 to the top member 702 absent force applied by the user. However, other methods of holding the tabs to the top member may be used in other embodiments.

The specific structure of the linkage tabs may vary. For example, the linkage tabs may include locking means to lock the tabs in the top member, such as expandable locking members that expand into corresponding recesses in a slot in the top member. In other embodiments, the tabs may be shaped differently (e.g. semi-circular, not flat, etc) than the first linkage tab 840, and the second linkage tab 842 shown in Figure 25. In some embodiments, the tabs and corresponding slots in the top member may also function as electrical connections to allow signals and/or power to be communicated between the top member and the base member.

In some embodiments, the linkage mechanisms may not be detachable from the top member once attached. For example, tabs including barbed latches that hold the linkage mechanisms to the top member may be used.

In some embodiments, the linkage mechanisms may be attachable to and detachable from the base member in addition to, or rather than, the top member. For example, the linkage mechanisms in some embodiments may include tabs similar to the first linkage tab 840 and the second linkage tab 842 described above and may be received in slots in the base member. Any other suitable type of attachable/detachable connections may also be used.

The operation of some features of the device 700 will now be described with respect to Figures 26 to 29.

Figure 26 is a top perspective view of the device 700 in a first operating configuration. As shown in Figure 26, as assembled, the device 700 has a first device end 850, an opposite second device end 852, a first device side 854 and an opposite second device side 856. The distance from the first device end 850 to the second device end 852 is referred to herein as the length of the device 700. The distance from the first device side 854 to the second device side 856 is referred to herein as the width of the device. In this embodiment, the length of each of the top member 702 and the base member 708 is approximately equal to the length of the device 700. However, as discussed herein, embodiments are not limited to a particular shape of the top and base members or to embodiments wherein the top and base members have similar lengths and/or widths.

In the first operating configuration shown in Figure 26, the top member 702 and the base member 708 are in an opened position similar to the opened positions of the devices 100, 400, 500 described above with reference to Figures 1 to 24. Specifically, the top member 702 overlies the base member 708 and the touchscreen 736 on the first top member surface 704 is accessible and faces away from the base member 708. The second top member surface 706 (shown in Figure 28) faces toward the base member 708. The first top member end 720 is at the first device end 850 and the second top member end 722 is at the second device end 852. The input member 712 is in the retracted position, and the keyboard 812 (shown in Figure 25) is not accessible. Thus, in the first operating configuration, the device 700 operates similar to a typical tablet computing device, wherein the user may interact with the device 700 via the touchscreen 736. In other embodiments, the keyboard or other input devices on the input member may be at least partially accessible in the retracted position and embodiments are not limited to the particular arrangement of the input member 712 shown in Figure 26.

In the embodiment shown in Figure 26, in the first operating configuration, the top member 702 and the base member 708 are substantially aligned along their length and width. As mentioned above, the size and shape of the top member and the base member may vary and, in some embodiments, the top and base members are not substantially aligned in any position.

The top member 702 and the base member 708 may be moved between the opened position and the closed position (shown in Figure 28) in a similar fashion as the devices 100, 500 described above with reference to Figures 1 to 16 and 18 to 24. Specifically, the user may lift the first top member end 720 in order to initially rotate the first top member end 720 away from the base member 708. The first linkage mechanism 716 and the second linkage mechanism 718 (shown in Figure 25), in this embodiment, will constrain the movement of the top member 702 to a pre-defined path throughout movement to the closed position. The pre-defined path will be similar to those described above with respect to Figures 1 to 24. The top member 702 may move through an angled position (shown in Figures 27 and 29) and to the closed position (shown in Figure 28). However, embodiments are not limited to those having a movement constrained to a pre-defined path. For example, in some embodiments, the lid member 702 may be linked to the base member 704 by a linkage having no motion constraint mechanism. For example, the linkage mechanism may be a simple bar link, a telescoping hinge or any other suitable linkage for providing opened, closed, and angled positions of the top member.

Figure 27 is a top perspective view of the device 700, wherein the top member 702 is at an angled position with respect to the base member, and the input member 712 is still in the retracted position. As can be seen in Figure 27, the keyboard 812 of the input member 712 is not easily accessible because the second top member end 722 is over the keyboard 812. From the position shown in Figure 27, the user may continue to rotate the top member 702 to the closed position shown in Figure 28, wherein the device is in a second operating configuration. Alternatively, the user may apply a lateral force to the input member 712 to move the input member 712 laterally from the retracted position shown in Figure 27 to the extended position shown in Figure 29, thereby moving the device 700 to a third operating configuration.

Figure 28 is a top perspective view of the device 700 in the second operating configuration. In the second operating configuration, the top member 702 and the base member 708 are in the closed position, and the input member 712 is in the retracted position. The top member 702 again overlies the base member 708. However, the top member 702 has been rotated approximately 180 degrees from the opened position so that the first top member surface 704 (shown in Figures 25 to 27 and 29) now faces toward to the base member 708. The second top member surface 706 is accessible and faces away from the base member 708. The first top member end 720 is at the second device end 852 and the second top member end 722 is at the first device end 850. Both the keyboard 812 and the touchscreen 736 are inaccessible and may be protected by the base member 708 in this second operating configuration. In some embodiments, the device may have one or more interface elements on a surface of the device that is accessible when the device is in the second operating configuration.

Figure 29 is a top perspective view of the device in the third operating configuration. In the third operating configuration, the top member 702 is at the angled position with respect to the base member 708 and the input member 712 is in the extended position. The keyboard 812 is accessible for this third operating configuration. In this embodiment, in order to stabilize the top member 702 in the angled position, the slidable tab 820 on the input member 712 may be moved upward from the lowered position (shown in Figure 27) to the raised position (shown in Figure 29). The slidable tab 820 is used as a hard stop to physically prevent the top member 702 from moving back to the opened position shown in Figure 26. In the orientation shown in Figure 29, gravity will bias the top member 702 toward the base member 708. From the angled position shown in Figure 29, the top member 702, in the absence of any force other than gravity, may rotate back to the opened position shown in Figure 26. However, in the raised position, the slidable tab 820 is located in the path of movement that the second top member end 722 would take in order for the top member 702 to move back to the opened position. Thus, the interaction of the slidable tab 820 with the second top member end 722 may hold the top member 702 in the angled position.

With the top member 702 in the angled position, and the input member 712 in the extended position, the user may view and use items on the touchscreen 736 while using the keyboard 812 to provide input to the device 700. The angle of the touchscreen 736 with respect to the keyboard may provide a more comfortable typing experience than if the keyboard was parallel to the touchscreen 736. The user may look in a generally or partially horizontal direction toward the touchscreen 736 while typing on the keyboard 812, which is substantially horizontal. Thus, the user may not need to look substantially downward at the touchscreen 736. The third operating configuration of the device 700 shown in Figure 29 provides an arrangement of the touchscreen 736 and the keyboard 812 that may be similar to a laptop, notebook and/or desktop computer.

In order to move the device 700 away from the third operating configuration shown in Figure 29, the user can apply force to the input member 712 to slide the input member 712 back to the retracted position shown in Figure 27. The slidable tab 820 may also be returned to the lowered position. The user may then rotate the top member 702 from the angled position through to the closed position shown in Figure 28 or back to the opened position shown in Figure 26.

The device 700 may be moved from the second operating configuration shown in Figure 28 back to the third operating configuration shown in Figure 29 and/or to the first operating configuration shown in Figure 26. In order to move the top member 702 from the closed position shown in Figure 28 to the opened position shown in Figure 26, the user may simply rotate the top member 702 in the opposite direction. In this embodiment, the top member 702 will follow the same pre-defined path, except in reverse. The first top member end 720 will again initially rotate away from the base member 708. However, in other embodiments, movement of the top member may not be constrained to a pre-defined path and/or movement from the closed position may follow a different path than movement to the opened position.

According to one aspect, a base or cover member and at least one linkage mechanism may be provided separately as an assembly or accessory for use with a mobile electronic device. The device, in this case, may be similar to any of the top members 102, 402, 502, 702 described above with respect to Figures 1 to 29. The base or cover member may be similar to any of the base member 108, 408, 508, 708 described above with reference to the figures. Similarly, the at least one linkage mechanism may, in some embodiments, be similar to any linkage mechanisms 110, 510 described above with reference to Figures 1 to 24, except that the at least one linkage mechanism would include means for being attached to, and possibly detached from, the top member. The first and second linkage mechanisms 716, 718 described above with reference to Figures 25 to 29 are shown as only one example of how the attaching and detaching functionality may be provided. As described above, the attaching and detaching functionality may be provided in numerous ways.

By providing the assembly (including the base or cover member and the at least one linkage mechanism) separately from the device, a user may use the device with no cover when desired. For example, the device without the assembly may require less space (e.g. for packing when space is limited). Cover members could possibly be swapped out with covers having a variety of designs. Thus, providing the assembly as an attachable/detachable assembly may provide more options to a user for configuring the device according to current needs.

In the embodiment described above with respect to Figures 25 to 29, the possibly separate assembly may include the base member 708 including the base member body 710 and the input member 712. The assembly may also include at least one linkage mechanism (e.g. the first and second linkage mechanisms 716, 718 in this embodiment) that, when attached to the top member 702, interconnect the top member 702 and the base member 708 such that the top member 702 and the base member 708 can be moved relative to each other between the opened position, the closed position, and the angled position discussed above with respect to Figures 25 to 29.

More than the three operating configurations may be provided by the device described herein. For example, in some embodiments, the input member may be provided with one or more interface elements, such as a keyboard, which is fully accessible when the input member is in the extended position, and the top member is in the opened position shown in Figure 26. The device 700 could thereby function similar to other "slider" devices that are provided with slide out keyboards that are generally parallel with touchscreens or other graphical display elements. Thus, a fourth operating configuration may be provided by such a device. One skilled in the art will appreciate that other operating configurations may be provided in addition to the three operating configurations discussed above.

The elements of the device 700, including the lid member 702, the base member 704 and the first and second linkage mechanisms 716 and 718 may have similar variations and alterations as described above with respect to the devices 100, 400, 500 shown in Figures 1 to 24.

One skilled in the art will appreciate that the device described herein (including the specific example embodiments described with reference to Figures 1 to 25) may further include components of typical mobile electronic devices. For example, electrical connections between the top member and the base member. For example, in some embodiments, the base member includes interface, display, or power supply elements that are connected electrically to elements of the top member. Such connections may be made via wires that travel internal to the linkage mechanism coupling the top and base members. A power supply such as a battery or connections to an external power supply may be present in one or both of the top member and the base member of the device.

Some embodiments may be smaller devices than the devices 100, 400, 500 and 700 shown in Figures 1 to 25. The linkage mechanisms described herein may be applied to more conventionally sized mobile communication devices such as mobile phones, portable gaming devices etc. Some embodiments include a push-button for initiating movement between the closed and opened positions, thereby possibly providing a fully single handed method of initiating the movement.

The linkage mechanism described herein with reference to the figures may include further features such as protective trims, guards, locking mechanisms and other elements without substantially altering the linkage mechanism function described herein. For example, in some embodiments, an additional cover is provided around the linkage mechanism that partially or substantially blocks some or all of the elements of the linkage mechanism from view and/or from being accessed by a user of the device. As another example, in some embodiments, one or more biasing mechanisms, such as springs or magnets, may be provided to provide a biasing force to assist with the movement of the device between the closed and opened positions. One skilled in the art will recognize that other modifications may be made while maintaining the functionality of the described linkage mechanism.

One skilled in the art will appreciate that the embodiments described herein and shown in Figures 1 to 25 may include electronic components not shown as well as means for powering the components and communicating between the components and the interface elements described herein. In some embodiments, power and/or electronic signal communication may be provided between the top and base members. For example, wireless or wired communication may be provided. Wires for transmitting power or electrical signals are provided in the linkage mechanism in some embodiments. Wireless methods such as Bluetooth™ may be used to communicate signals between processing elements in each of the top and base members. Various other configurations are also possible while remaining consistent with aspects of the disclosure.

Some embodiments may include a mechanism, such as a clutch mechanism, to prevent damage to the device in the event that the linkage mechanism is overloaded by a force applied to the device. For example, damage may result if a user of the device applies too much force to rotate the top member while also applying force to hold the linkage in place, thereby attempting to force the top member to move out of the pre-defined path set by the motion constraint mechanism. However, a clutch mechanism may prevent such damage by allowing a component, such as the first or second node, to "slip" and allow motion outside of the pre-defined path if a pre-determined amount of force is applied. For example, a pulley fixed to the top or base member could include a mechanism to allow the pulley to rotate with respect to the top or base member in the presence of sufficient force. One skilled in the art will appreciate that a clutch mechanism could be implemented in various ways. By allowing a component of the device to "slip" as described above, the top member and the base member may be moved out of alignment compared to the proper pre-defined movement. However, a user may, in some embodiments, simply push the top member against the base member in either the closed or opened position to again overload the clutch mechanism and re-align the top and base members.

What has been described is merely illustrative of the application of the principles of the disclosure. Other arrangements and methods can be implemented by those skilled in the art without departing from the spirit and scope of the disclosure.

**Claims**

1. A mobile electronic device (700) comprising:

a first member (702) having a first surface (704) and a second surface (706) opposite to the first surface;
a second member (708) comprising a body (710) and an input member (712), the input member (712) comprising an input device (812) and being coupled to the body (710) by a displacement mechanism (714, 715) adapted to allow the input member (702) to move between an extended position and a retracted position; and
at least one linkage mechanism (716, 718) interconnecting the first member (702) and the second member (708) such that the first member (702) and the second member (708) can be moved relative to each other between:

a first position wherein the first member (702) overlies the second member (708), the first surface (704) is accessible and faces away from the second member (708), and the second surface (706) faces toward the second member (708);
a second position wherein the first member (702) overlies the second member (708), the second surface (706) is accessible and faces away from the second member (708), and the first surface (704) faces toward the second member (708); and
a third position wherein the first member (702) is angled with respect to the second member (708) and the first surface (704) is accessible,

wherein the input device is accessible when the first member (702) and the second member (708) are in the third position and the input member (710) is in the extended position.

2. The device of (700) claim 1, wherein the displacement mechanism (714, 715) and the at least one linkage mechanism (716, 718) provide at least three operating configurations for the device (700) comprising:

a first operating configuration in which the first member (702) and the second member (708) are in the first position and the input member (712) is in the retracted position;
a second operating configuration in which the first member (702) and the second member (708) are in the second position and the input member (712) is in the retracted position; and
a third operating configuration in which the first member (702) and the second member (708) are in the third position, the input member (702) is in the extended position and the input member (712) is accessible.

3. The device (700) of claim 1 or 2, further comprising a stop mechanism (820) adapted to hold the first member (702) and the second member (708) in the third position.

4. The device (700) of any one of claims 1 to 3, wherein the displacement mechanism (714, 715) comprises a lateral displacement mechanism adapted to allow the input member (712) to be moved laterally between the retracted position and the extended position, and optionally
the lateral displacement mechanism comprises at least one sliding hinge (714, 715).

5. The device (700) of any one of claims 1 to 4, wherein the second member (708) comprises a recess (774), and, in the retracted position, the input member (712) is received in the recess (774).

6. The device (700) of any one of claims 1 to 5, wherein the at least one linkage mechanism (716, 718) is attachable to the first member (702), and optionally
the at least one linkage mechanism (716, 718) is detachable from the first member (702).

7. The device (700) of any one of claims 1 to 6, wherein the first member (702) rotates about 180 degrees with respect to the second member (708) in movement of the first member (702) between the first position and the second position, and optionally,
the at least one linkage mechanism (716, 718) allows continuous rotation of the first member (702) for movement from the first position to the second position and for movement from the second position to the first position.

8. The device (700) of any one of claims 1 to 7, wherein the at least one linkage mechanism (716, 718) comprises: a linkage intermediate the first member (702) and the second member (708), the linkage having a fixed length; and a motion constraint mechanism that constrains movement of the first member (702) with respect to the second member (708) between the first and second positions to a pre-defined rotational and translational path, the rotational and translational path being defined by a rotation of the first member (702) with respect to the second member (708) and a counter-rotation of the linkage with respect to the second member (708), the counter-rotation of the linkage being actuated by the rotation of the first member (702).

9. The device (700) of any one of claims 1 to 8, wherein the first member (702) has a first end (720), a second end (722) and a length (L) between the first end (720) and the second end (722), and the at least one linkage mechanism (716, 718) is connected to the first member (702) less than one quarter of the length (L) away from the second end (722) of the first member, the first end (720) initially rotating away from the second member (708) during both movement from the first position to the second position and movement from the second position to the first position.

10. The device (700) of any one of claims 1 to 9, wherein the at least one linkage mechanism (716, 718) comprises a first linkage mechanism located at a first side of the device and a second linkage mechanism located at the second side of the device.

11. An assembly for mobile electronic device (702), the assembly comprising:

a cover member (708) comprising a body (710) and an input member (712), the input member (712) comprising an input device (812) and being coupled to the body (710) by a displacement mechanism (714, 715) that allows the input member (712) to move between an extended position and a retracted position; and at least one linkage mechanism (716, 718) that is attachable to the device (702), the at least one linkage mechanism (716, 718), when attached to the device (702), interconnecting the device (702) and the cover member (708) such that the device (702) and the cover member (708) can be moved relative to each other between:

a first position wherein the device (702) overlies the cover member (708);
a second position wherein the device (702) is angled with respect to the cover member (708); and
a third position wherein the device (702) overlies the cover member (708) and the device (702) is rotated about 180 degrees with respect to the first position.

12. The assembly of claim 11, wherein the at least one linkage mechanism (716, 718) is detachable from the device (702).

13. The assembly of claim 11 or 12, wherein the cover member (708) comprises a recess (774), and, in the retracted position, the input member (712) is received in the recess (774).

14. The assembly of any one of claims 11 to 13, wherein the displacement mechanism comprises at least one sliding hinge (714, 715) that allows the input member (712) to slide between the retracted position and the extended position.

15. The device (700) of any one of claims 1 to 10 or the assembly of any one of claims 11 to 14, wherein the input device comprises a keyboard (812).


**Amended claims in accordance with Rule 137(2) EPC.**

**1.** A mobile electronic device (700) comprising:

a first member (702) having a first surface (704) and a second surface (706) opposite to the first surface;
a second member (708) comprising a body (710) and an input member (712), the input member (712) comprising an input device (812) and being coupled to the body (710) by a displacement mechanism (714, 715) adapted to allow the input member (712) to move between an extended position and a retracted position; and at least one linkage mechanism (716, 718) interconnecting the first member (702) and the second member (708) such that the first member (702) and the second member (708) can be moved relative to each other between:

a first position wherein the first member (702) overlies the second member (708), the first surface (704) is accessible and faces away from the second member (708), and the second surface (706) faces toward the second member (708);

a second position wherein the first member (702) overlies the second member (708), the second surface (706) is accessible and faces away from the second member (708), and the first surface (704) faces toward the second member (708); and

a third position wherein the first member (702) is angled with respect to the second member (708) and the first surface (704) is accessible,

wherein the input device (812) is accessible when the first member (702) and the second member (708) are in the third position and the input member (712) is in the extended position.

**2.** The device of (700) claim 1, wherein the displacement mechanism (714, 715) and the at least one linkage mechanism (716, 718) provide at least three operating configurations for the device (700) comprising:

a first operating configuration in which the first member (702) and the second member (708) are in the first position and the input member (712) is in the retracted position;

a second operating configuration in which the first member (702) and the second member (708) are in the second position and the input member (712) is in the retracted position; and

a third operating configuration in which the first member (702) and the second member (708) are in the third position, the input member (712) is in the extended position and the input device (812) is accessible.

**3.** The device (700) of claim 1 or 2, further comprising a stop mechanism (820) adapted to hold the first member (702) and the second member (708) in the third position.

**4.** The device (700) of any one of claims 1 to 3, wherein the displacement mechanism (714, 715) comprises a lateral displacement mechanism adapted to allow the input member (712) to be moved laterally between the retracted position and the extended position, and optionally
the lateral displacement mechanism comprises at least one sliding hinge (714, 715).

**5.** The device (700) of any one of claims 1 to 4, wherein the second member (708) comprises a recess (774), and, in the retracted position, the input member (712) is received in the recess (774).

**6.** The device (700) of any one of claims 1 to 5, wherein the at least one linkage mechanism (716, 718) is attachable to the first member (702), and optionally
the at least one linkage mechanism (716, 718) is detachable from the first member (702).

**7.** The device (700) of any one of claims 1 to 6, wherein the first member (702) rotates about 180 degrees with respect to the second member (708) in movement of the first member (702) between the first position and the second position, and optionally,
the at least one linkage mechanism (716, 718) allows continuous rotation of the first member (702) for movement from the first position to the second position and for movement from the second position to the first position.

**8.** The device (700) of any one of claims 1 to 7, wherein the at least one linkage mechanism (716, 718) comprises:
a linkage intermediate the first member (702) and the second member (708), the linkage having a fixed length; and
a motion constraint mechanism that constrains movement of the first member (702) with respect to the second member (708) between the first and second positions to a pre-defined rotational and translational path, the rotational and translational path being defined by a rotation of the first member (702) with respect to the second member (708) and a counter-rotation of the linkage with respect to the second member (708), the counter-rotation of the linkage being actuated by the rotation of the first member (702).

**9.** The device (700) of any one of claims 1 to 8, wherein the first member (702) has a first end (720), a second end (722) and a length (L) between the first end (720) and the second end (722),
and the at least one linkage mechanism (716, 718) is connected to the first member (702) less than one quarter of the length (L) away from the second end (722) of the first member, the first end (720) initially rotating away from the second member (708) during both movement from the first position to the second position and movement from the second position to the first position.

**10.** The device (700) of any one of claims 1 to 9, wherein the at least one linkage mechanism (716, 718) comprises a first linkage mechanism located at a first side of the device and a second linkage mechanism located at the second side of the device.

**11.** An assembly for a mobile electronic device (702), the assembly comprising:

a cover member (708) comprising a body (710) and an input member (712), the input member (712) comprising an input device (812) and being coupled to the body (710) by a displacement mechanism (714, 715) that allows the input member (712) to move between an extended position and a retracted position; and
at least one linkage mechanism (716, 718) that is attachable to and detachable from the device (702), the at least one linkage mechanism (716, 718), when attached to the device (702), interconnecting the device (702) and the cover member (708) such that the device (702) and the cover member (708) can be moved relative to each other between:

a first position wherein the device (702) overlies the cover member (708);
a second position wherein the device (702) is angled with respect to the cover member (708); and
a third position wherein the device (702) overlies the cover member (708) and the device (702) is rotated about 180 degrees with respect to the first position.

**12.** The assembly of claim 11, wherein the cover member (708) comprises a recess (774), and, in the retracted position, the input member (712) is received in the recess (774).

**13.** The assembly of claim 11 or 12, wherein the displacement mechanism comprises at least one sliding hinge (714, 715) that allows the input member (712) to slide between the retracted position and the extended position.

**14.** The device (700) of any one of claims 1 to 10 or the assembly of any one of claims 11 to 13, wherein the input device (812) comprises a keyboard.

**FIG. 1**

EP 2 557 473 A1

**FIG. 2**

FIG. 3

**FIG. 4**

EP 2 557 473 A1

FIG. 5

**FIG. 6**

EP 2 557 473 A1

**FIG. 7**

**FIG. 8**

EP 2 557 473 A1

FIG. 9

**FIG. 10**

EP 2 557 473 A1

**FIG. 11**

FIG. 12

FIG. 13

100

106

104

102

162

108

146

**FIG. 14**

EP 2 557 473 A1

**FIG. 15**

**FIG. 16**

EP 2 557 473 A1

**FIG. 17**

EP 2 557 473 A1

FIG. 18

49

FIG. 19

FIG. 20

**FIG. 21**

EP 2 557 473 A1

**FIG. 22**

**FIG. 23**

EP 2 557 473 A1

FIG. 24

FIG. 25

FIG. 26

EP 2 557 473 A1

**FIG. 27**

**FIG. 28**

**FIG. 29**

EP 2 557 473 A1

EP 2 557 473 A1

Europäisches
Patentamt
European
Patent Office
Office européen
des brevets

**EUROPEAN SEARCH REPORT**

Application Number

EP 11 17 7100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 266 236 B1 (KU EDMOND [US] ET AL) 24 July 2001 (2001-07-24)<br><br>* column 4, line 26 - line 57; figures 1,2,10 *<br>* column 7, line 9 - line 32 *<br>----- | 1,2,4,5, 7,10,11, 13-15 | INV. G06F1/16 |
| Y | US 2003/197745 A1 (DALY JOHN J [US]) 23 October 2003 (2003-10-23)<br>* paragraphs [0002], [0003], [0013], [0014]; figure 1 *<br>----- | 1,11 | |
| Y | US 2002/126441 A1 (KUO MING-CHIH [TW] ET AL) 12 September 2002 (2002-09-12)<br><br>* paragraph [0015]; figures 2,3 *<br>----- | 1,2,4,5, 7,10,11, 13-15 | |
| A | US 2011/038108 A1 (CHANG CHING-TSAI [TW] ET AL) 17 February 2011 (2011-02-17)<br>* abstract; figures 3,5-7 *<br>----- | 1-15 | |
| A | US 5 255 214 A (MA HSI-KUANG [TW]) 19 October 1993 (1993-10-19)<br>* abstract; figures 2-5 *<br>----- | 1-15 | TECHNICAL FIELDS SEARCHED (IPC)<br><br>G06F |

The present search report has been drawn up for all claims

| Place of search | Date of completion of the search | Examiner |
|---|---|---|
| Munich | 27 December 2011 | Anastassiades, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 7100

This annex lists the patent family members relating to the patent documents cited in the above-mentioned European search report.
The members are as contained in the European Patent Office EDP file on
The European Patent Office is in no way liable for these particulars which are merely given for the purpose of information.

27-12-2011

| Patent document cited in search report | | Publication date | Patent family member(s) | | Publication date |
|---|---|---|---|---|---|
| US 6266236 | B1 | 24-07-2001 | NONE | | |
| US 2003197745 | A1 | 23-10-2003 | AU<br>US<br>WO | 2003219356 A1<br>2003197745 A1<br>03090054 A2 | 03-11-2003<br>23-10-2003<br>30-10-2003 |
| US 2002126441 | A1 | 12-09-2002 | NONE | | |
| US 2011038108 | A1 | 17-02-2011 | TW<br>US | 201106139 A<br>2011038108 A1 | 16-02-2011<br>17-02-2011 |
| US 5255214 | A | 19-10-1993 | NONE | | |

EPO FORM P0459

For more details about this annex : see Official Journal of the European Patent Office, No. 12/82